# EUROPEAN PATENT APPLICATION

(11) **EP 4 804 502 A1**
(43) Date of publication of application: **09.09.2026**
(21) Application number: 24900832.7
(22) Date of filing: 17.10.2024
(51) Int. Cl.: H04M 1/02, H05K 5/02, H02J 7/00, H04B 1/3883, H05K 9/00

(54) **BATTERY ASSEMBLY AND ELECTRONIC DEVICE COMPRISING SAME**

(30) Priority: 04.12.2023 KR 20230173646; 16.01.2024 KR 20240006968
(71) Applicant: Samsung Electronics Co., Ltd., Suwon-si, Gyeonggi-do 16677 (KR)
(72) Inventor: YANG, Sunga, Suwon-si, Gyeonggi-do 16677 (KR); KIM, Shihyun, Suwon-si, Gyeonggi-do 16677 (KR)
(74) Representative: Gulde & Partner
(86) International application number: PCT/KR2024/015828
(87) International publication number: WO 2025/121644

(57) **Abstract**

An electronic device according to one embodiment of the present disclosure may comprise: a housing; and a battery assembly which is disposed in the housing, and which includes a battery cell and a cover member disposed to encompass at least a portion of the battery cell. The cover member of the battery assembly can include: a main cover portion which is disposed to encompass the front surface of the battery cell and which includes an inner surface facing the battery cell and an outer surface opposite to the inner surface; a first cover portion which extends from the main cover portion, and which is disposed to encompass from the edge of one side of the battery cell to a portion of the front surface of the battery cell; and a second cover portion which extends from the main cover portion, and which is disposed to encompass from the edge of the other side of the battery cell to the portion of the front surface of the battery cell. A first adhesive area of the first cover portion and a second adhesive area of the second cover portion can be attached to the front surface of the battery cell. When viewing the front surface of the battery assembly, the first cover portion and the second cover portion can be spaced apart from each other.

## Description

### [Technical Field]

An embodiment disclosed in the present document relates to a battery assembly and an electronic device including the same.

### [Background Art]

With the remarkable advancement of information and communication technology and semiconductor technology, the supply and use of various electronic devices have increased rapidly. In particular, recent electronic devices are being developed to be portable and capable of communication.

An electronic device refers to a device that performs a specific function according to a program installed therein, ranging from home appliances to electronic organizers, portable multimedia players, mobile communication terminals, tablet personal computers, image/audio devices, desktop/laptop computers, and vehicle navigation systems. For example, such electronic devices may output stored information as audio or video. As the degree of integration of electronic devices increases and ultra-high-speed, large-capacity wireless communication becomes widespread, various functions may be mounted on a single electronic device such as a mobile communication terminal. For example, not only communication functions but also entertainment functions such as games, multimedia functions such as music/video playback, communication and security functions for mobile banking and the like, and functions such as schedule management and electronic wallets are being integrated into a single electronic device. Such electronic devices are being miniaturized so that users can carry them conveniently.

A portable electronic device may include a battery so that it can be used in various places without depending on a power supply device. The battery may be wrapped with a cover member having excellent impact resistance and adhesive performance to withstand external impacts such as dropping of the electronic device, and may be attached to the housing of the electronic device.

The foregoing information may be provided as related art for the purpose of aiding understanding of the present disclosure. No claim or determination is made as to whether any of the foregoing is applicable as prior art in relation to the disclosure.

### [Disclosure of Invention]

### [Solution to Problems]

The battery cell needs to be separated from the housing fixedly disposed therein and detached from the cover member for rework during the manufacturing process or maintenance during use. When reworking or separating, a battery separation structure that is easy to separate should be considered so as not to affect other surrounding parts.

An electronic device according to an embodiment of the disclosure may include a housing and a battery assembly disposed within the housing, the battery assembly including a battery cell and a cover member disposed to wrap at least a portion of the battery cell. The cover member of the battery assembly may include a main cover portion disposed to wrap the rear surface of the battery cell and including an inner surface facing the battery cell and an outer surface opposite the inner surface, a first cover portion extending from the main cover portion and disposed to wrap from one-side edge of the battery cell to a portion of the front surface of the battery cell, and a second cover portion extending from the main cover portion and disposed to wrap from the other-side edge of the battery cell to a portion of the front surface of the battery cell. A first adhesive region of the first cover portion and a second adhesive region of the second cover portion may be attached to the front surface of the battery cell. When viewing the front surface of the battery assembly, the first cover portion and the second cover portion may be spaced apart.

A battery assembly according to an embodiment of the disclosure may include a battery cell and a cover member disposed to wrap at least a portion of the battery cell. The cover member may include a main cover portion disposed to wrap the rear surface of the battery cell and including an inner surface facing the battery cell and an outer surface opposite the inner surface, a first cover portion extending from the main cover portion and disposed to wrap from one-side edge of the battery cell to a portion of the front surface of the battery cell, and a second cover portion extending from the main cover portion and disposed to wrap from the other-side edge of the battery cell to a portion of the front surface of the battery cell. A first adhesive region of the first cover portion and a second adhesive region of the second cover portion may be attached to the front surface of the battery cell. When viewing the front surface of the battery assembly, the first cover portion and the second cover portion may be spaced apart.

However, the problem to be solved in the disclosure is not limited to the problems mentioned above, and may be variously confirmed without departing from the spirit and scope of the disclosure.

### [Brief Description of Drawings]

FIG. 1 is a block diagram illustrating an electronic device within a network environment according to an embodiment disclosed herein.
FIG. 2 is a perspective view illustrating a front surface of an electronic device according to an embodiment disclosed herein.
FIG. 3 is a perspective view illustrating a rear surface of the electronic device illustrated in FIG. 2 according to an embodiment disclosed herein.
FIG. 4A is an exploded perspective view illustrating a front surface of the electronic device illustrated in FIG. 2 according to an embodiment disclosed herein.
FIG. 4B is an exploded perspective view illustrating a rear surface of the electronic device illustrated in FIG. 2 according to an embodiment disclosed herein.
FIG. 5A is a view illustrating one surface (e.g., an inner surface) of a battery cover member 300 facing a first direction according to an embodiment of the disclosure.
FIG. 5B is a view illustrating the other surface (e.g., an outer surface) of the battery cover member 300 facing a second direction opposite to the first direction according to an embodiment of the disclosure.
FIG. 6 is a view illustrating a battery cell disposed on one surface of the battery cover member 300 according to an embodiment of the disclosure.
FIGS. 7A to 7D are flowcharts illustrating an operation of the battery cover member 300 covering the battery cell after FIG. 6 according to an embodiment of the disclosure.
FIG. 8A is a view illustrating one surface of a battery cover member 300a facing a first direction according to an embodiment of the disclosure.
FIG. 8B is a view illustrating the other surface of the battery cover member 300a facing a second direction opposite to the first direction according to an embodiment of the disclosure.
FIG. 9A is a view illustrating one surface of a battery cover member 300b facing a first direction according to an embodiment of the disclosure.
FIG. 9B is a view illustrating the other surface of the battery cover member 300b facing a second direction opposite to the first direction according to an embodiment of the disclosure.
FIG. 10A is a view illustrating one surface of a battery cover member 300c facing a first direction according to an embodiment of the disclosure.
FIG. 10B is a view illustrating the other surface of the battery cover member 300c facing a second direction opposite to the first direction according to an embodiment of the disclosure.
FIG. 11 is a view illustrating one surface of a battery cover member 300d facing a first direction according to an embodiment of the disclosure.
FIG. 12 is a view illustrating a battery cell disposed on one surface of the battery cover member 300d according to an embodiment of the disclosure.
FIG. 13 is a view illustrating the battery cover member 300d wrapping the battery cell according to an embodiment of the disclosure.
FIG. 14 is a view illustrating one surface of a battery cover member 300e facing a first direction according to an embodiment of the disclosure.
FIG. 15A is a view illustrating a battery cell disposed on one surface of the battery cover member 300e according to an embodiment of the disclosure.
FIG. 15B is a view illustrating the battery cover member 300e wrapping the battery cell according to an embodiment of the disclosure.
FIG. 16A is a view illustrating one surface of a battery cover member 300f facing a first direction according to an embodiment of the disclosure.
FIG. 16B is a view illustrating one surface of a battery cover member 300g facing a first direction according to an embodiment of the disclosure.

### [Mode for the Invention]

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. In connection to the description of the drawings, similar reference numerals may be used for similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

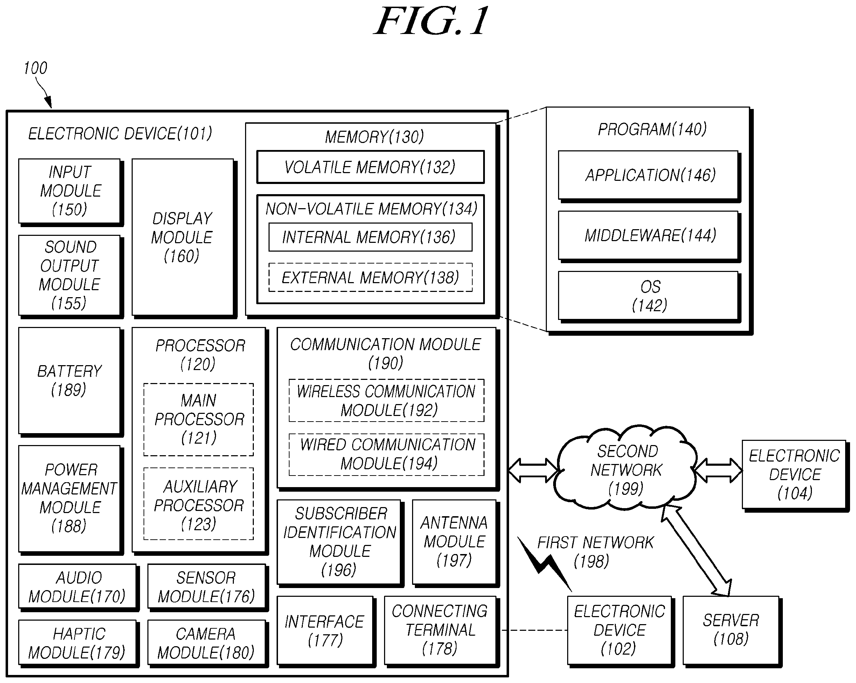

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, in case that the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, e.g., a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

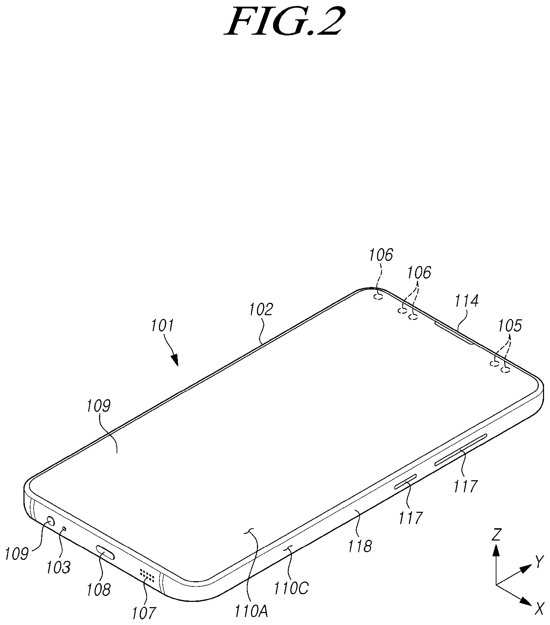

FIG. 2 is a perspective view illustrating a front surface of an electronic device according to an embodiment disclosed in the present document.

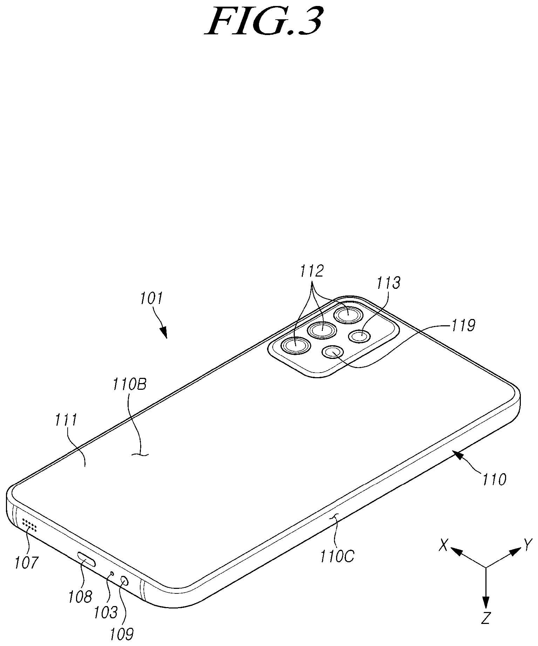

FIG. 3 is a perspective view illustrating a rear surface of the electronic device shown in FIG. 2 according to an embodiment disclosed in the present document.

Referring to FIGS. 2 and 3, an electronic device 101 according to an embodiment (for example, the electronic device 101 of FIG. 1) may include a housing 110 including a first surface (or front surface) 110A, a second surface (or rear surface) 110B, and a side surface 110C surrounding the space between the first surface 110A and the second surface 110B. In an embodiment (not shown), the housing 110 may refer to a structure forming a portion of the first surface 110A of FIG. 2, the second surface 110B of FIG. 3, and the side surfaces 110C.

According to an embodiment, the first surface 110A may be formed by a front plate 102 (e.g., a glass plate including various coating layers, or a polymer plate) that is substantially transparent at least in part. The second surface 110B may be formed by a rear plate 111 that is substantially opaque. The rear plate 111 may be formed by, for example, coated or colored glass, ceramic, polymer, metal (e.g., aluminum, stainless steel (STS), or magnesium), or a combination of at least two of the above materials. The side surface 110C may be formed by a side structure (or "side bezel structure") 118 that combines with the front plate 102 and the rear plate 111 and includes metal and/or polymer. In an embodiment, the rear plate 111 and the side structure 118 may be integrally formed and include the same material (e.g., a metal material such as aluminum).

According to an embodiment, the front plate 102 may include region(s) that are curved toward the rear plate 111 at least at a portion of the edge and extend seamlessly. For example, the front plate 102 (or the rear plate 111) may include only one of the regions curved and extending toward the rear plate 111 (or the front plate 102) at one-side edge of the first surface 110A. According to an embodiment, the front plate 102 or the rear plate 111 may be substantially flat in shape, and in this case, may not include a curved and extended region. When the front plate 102 or the rear plate 111 includes a curved and extended region, the thickness of the electronic device 101 at the portion including the curved and extended region may be smaller than the thickness of other portions.

According to an embodiment, the electronic device 101 may include at least one of a display 101, an audio module (e.g., a microphone hole 103, an external speaker hole 107, a receiver hole for call 114), a sensor module (e.g., a first sensor module 104, a second sensor module (not shown), a third sensor module 119), a camera module (e.g., a first camera device 105, a second camera device 112, a flash 113), a key input device 117, a light-emitting element 106, and a connector hole (e.g., a first connector hole 108, a second connector hole 109). In an embodiment, the electronic device 101 may omit at least one of the components (e.g., the key input device 117, or the light-emitting element 106) or may additionally include other components.

According to an embodiment, the display 101 may output a screen or be visually exposed through a substantial portion of the first surface 110A (e.g., the front plate 102). In an embodiment, at least a portion of the display 101 may be visually exposed through the front plate 102 forming the first surface 110A or through a portion of the side surface 110C. In an embodiment, an edge of the display 101 may be formed to be substantially the same as an adjacent outer shape of the front plate 102. In an embodiment (not shown), in order to expand the area where the display 101 is visually exposed, a gap between an outer edge of the display 101 and an outer edge of the front plate 102 may be formed to be substantially the same.

According to an embodiment, a recess or an opening may be formed in a portion of the screen display area of the display 101, and at least one of an audio module (e.g., a receiver hole for call 114) aligned with the recess or the opening, a sensor module (e.g., a first sensor module 104), a camera module (e.g., a first camera device 105), and a light-emitting element 106 may be included. In an embodiment (not shown), on a rear surface of the screen display area of the display 101, at least one of an audio module (e.g., a receiver hole for call 114), a sensor module (e.g., a first sensor module 104), a camera module (e.g., a first camera device 105), a fingerprint sensor (not shown), and a light-emitting element 106 may be included. In an embodiment (not shown), the display 101 may be combined or adjacent to a touch sensing circuit, a pressure sensor capable of measuring the intensity (pressure) of touch, and/or a digitizer detecting a stylus pen of a magnetic field method.

According to an embodiment, the audio module 103, 107, 114 may include a microphone hole 103 and speaker holes (e.g., an external speaker hole 107, a receiver hole for call 114). A microphone may be disposed inside the microphone hole 103 to acquire external sounds, and in an embodiment, a plurality of microphones may be disposed to sense the direction of sound. The speaker hole may include an external speaker hole 107 and a receiver hole for call 114. In an embodiment, the speaker hole (e.g., the external speaker hole 107, the receiver hole for call 114) and the microphone hole 103 may be implemented as one hole, or a speaker may be included without the speaker hole (e.g., the external speaker hole 107, the receiver hole for call 114) (e.g., a piezo speaker).

According to an embodiment, the sensor module may generate an electrical signal or a data value corresponding to an operating state of the interior of the electronic device 101 or an environmental state of the outside. The sensor module may include, for example, a first sensor module 104 (e.g., a proximity sensor) disposed on the first surface 110A of the housing 110 and/or a second sensor module (not shown) (e.g., a fingerprint sensor), and/or a third sensor module 119 disposed on the second surface 110B of the housing 110. A second sensor module (not shown) (e.g., a fingerprint sensor) may be disposed on the first surface 110A (e.g., the display 101) of the housing 110 as well as the second surface 110B or the side surface 110C. The electronic device 101 may further include at least one of, for example, a gesture sensor, a gyro sensor, an air pressure sensor, a magnetic sensor, an acceleration sensor, a grip sensor, a color sensor, an IR (infrared) sensor, a biometric sensor, a temperature sensor, a humidity sensor, or an illuminance sensor 104.

According to an embodiment, the camera module may include a first camera device 105 disposed on the first surface 110A of the electronic device 101, a second camera device 112 disposed on the second surface 110B, and/or a flash 113. The camera devices (e.g., the first camera device 105, the second camera device 112) may include one or a plurality of lenses, an image sensor, and/or an image signal processor. The flash 113 may include, for example, a light-emitting diode or a xenon lamp. In an embodiment, one or more lenses (an infrared camera, a wide-angle and telephoto lens) and image sensors may be disposed on one surface of the electronic device 101. In an embodiment, the flash 113 may emit infrared light, and infrared light emitted by the flash 113 and reflected by the subject may be received through the third sensor module 119. The electronic device 101 or a processor (e.g., the processor 120 of FIG. 1) of the electronic device 101 may detect depth information of the subject based on the time point when infrared light is received in the third sensor module 119.

According to an embodiment, the key input device 117 may be disposed on the side surface 110C of the housing 110. In an embodiment, the electronic device 101 may not include some or all of the aforementioned key input device 117, and the key input device 117 not included may be implemented in a different form such as a soft key on the display 101. In an embodiment, the key input device may include a sensor module disposed on the second surface 110B of the housing 110.

According to an embodiment, the light-emitting element 106 may be disposed on the first surface 110A of the housing 110, for example. The light-emitting element 106 may provide state information of the electronic device 101 in the form of light, for example. In an embodiment, the light-emitting element 106 may provide a light source linked to the operation of the camera module (e.g., the first camera device 105), for example. The light-emitting element 106 may include, for example, a light-emitting diode, an infrared light-emitting diode, and a xenon lamp.

According to an embodiment, the connector hole (e.g., the first connector hole 108, the second connector hole 109) may include a first connector hole 108 capable of accommodating a connector (e.g., a USB connector) for transmitting and receiving power and/or data with an external electronic device (e.g., the electronic device 1002 of FIG. 1), and/or a second connector hole (e.g., a headphone jack) 109 capable of accommodating a connector for transmitting and receiving audio signals with an external electronic device.

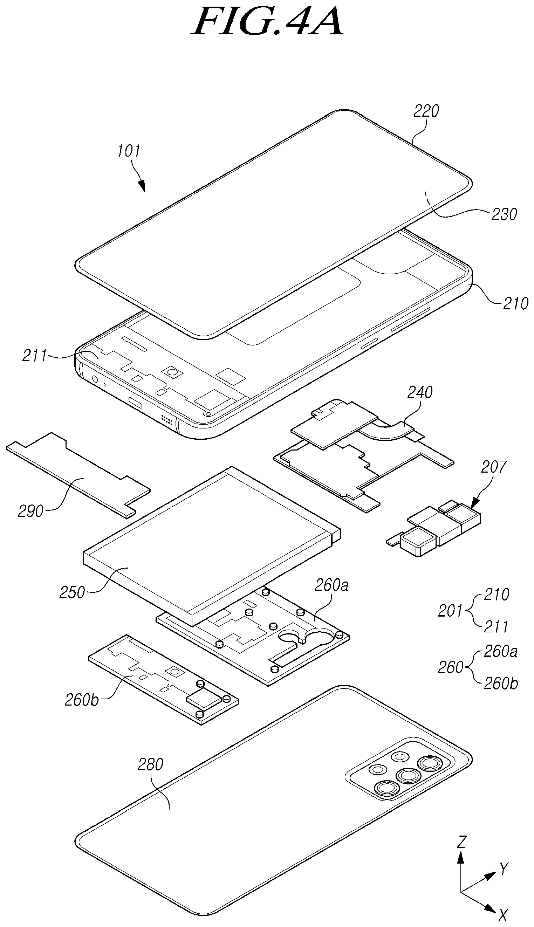

FIG. 4A is an exploded perspective view illustrating a front surface of the electronic device shown in FIG. 2 according to an embodiment disclosed in the present document.

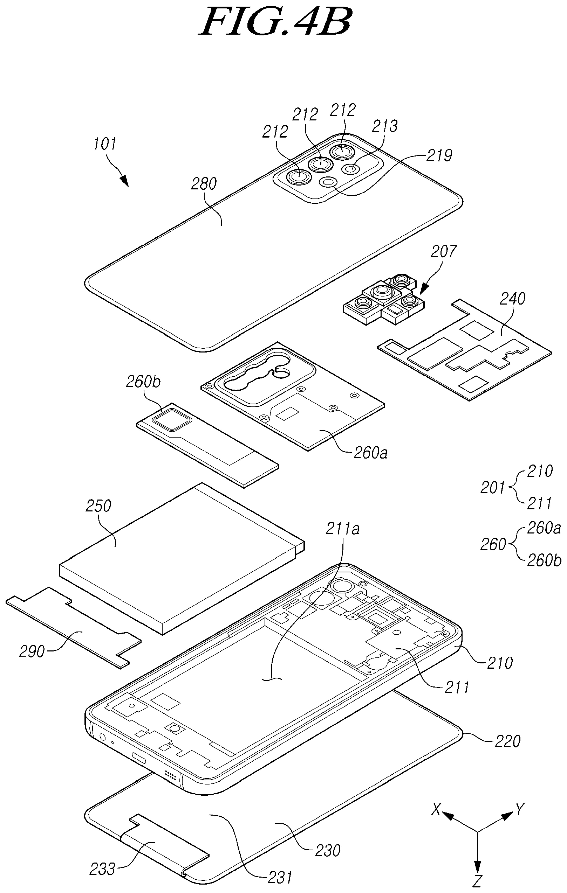

FIG. 4B is an exploded perspective view illustrating a rear surface of the electronic device shown in FIG. 2 according to an embodiment disclosed in the present document.

Referring to FIGS. 4A and 4B, the electronic device 101 (e.g., the electronic device 101 of FIG. 1, FIG. 2, or FIG. 3) may include a side structure 210, a first support member 211 (e.g., a bracket), a front plate 220 (e.g., the front plate 102 of FIG. 2), a display 230 (e.g., the display 101 of FIGS. 2 and 3), a printed circuit board (or a substrate assembly) 240, a battery 250, a second support member 260 (e.g., a rear case), an antenna, a camera assembly 207, and a rear plate 280 (e.g., the rear plate 111 of FIG. 3).

According to an embodiment, the electronic device 101 may omit at least one of the components (e.g., the first support member 211 or the second support member 260) or may additionally include other components. At least one of the components of the electronic device 101 may be the same as or similar to at least one of the components of the electronic device 101 of FIG. 2 or FIG. 3, and redundant descriptions are omitted hereinafter.

According to an embodiment, the first support member 211 may be disposed inside the electronic device 101 and connected to the side structure 210, or may be integrally formed with the side structure 210. The first support member 211 may be formed of, for example, a metal material and/or a non-metal (e.g., a polymer) material. When at least partially formed of a metal material, a portion of the side structure 210 or the first support member 211 may function as an antenna. The first support member 211 may have the display 230 coupled to one surface and the printed circuit board 240 coupled to the other surface. The printed circuit board 240 may be equipped with a processor (e.g., the processor 120 of FIG. 1), a memory (e.g., the memory 130 of FIG. 1), and/or an interface (e.g., the interface 177 of FIG. 1). The processor may include, for example, one or more of a central processing unit, an application processor, a graphics processing unit, an image signal processor, a sensor hub processor, or a communication processor.

According to an embodiment, the first support member 211 and the side structure 210 may be combined and referred to as a front case or a housing 201. According to an embodiment, the housing 201 may be understood as a structure for accommodating, protecting, or disposing the printed circuit board 240 or the battery 250. In an embodiment, the housing 201 may be understood to include a structure that can be visually or tactilely perceived by a user on the exterior of the electronic device 101, for example, a side structure 210, a front plate 220, and/or a rear plate 280. In an embodiment, "front or rear surface of the housing 201" may mean the first surface 110A of FIG. 2 or the second surface 110B of FIG. 3. In an embodiment, the first support member 211 is disposed between the front plate 220 (e.g., the first surface 110A of FIG. 2) and the rear plate 280 (e.g., the second surface 110B of FIG. 3), and may function as a structure for disposing electrical/electronic parts such as the printed circuit board 240 or the camera assembly 207.

According to an embodiment, the display 230 may include a display panel 231 and a flexible printed circuit board 233 extending from the display panel 231. The flexible printed circuit board 233 may be understood as being disposed at least partially on the rear surface of the display panel 231 and electrically connected to the display panel 231. In an embodiment, the reference numeral '231' may be understood as a protection sheet disposed on the rear surface of the display panel. For example, if not separately distinguished in the subsequent detailed description, the protection sheet may be understood as part of the display panel 231. In an embodiment, the protection sheet may function as a shock absorption structure (e.g., a low-density elastic body such as sponge) or an electromagnetic shielding structure (e.g., a copper (CU) sheet) that absorbs external force. According to an embodiment, the display 230 may be disposed on the inner side surface of the front plate 220, and by including a light-emitting layer, a screen may be output through at least a portion of the first surface 110A of FIG. 2 or the front plate 220. As mentioned above, the display 230 may output a screen through substantially the entire surface area of the first surface 110A of FIG. 2 or the front plate 220.

According to an embodiment, memory may include, for example, volatile memory or non-volatile memory.

According to an embodiment, the interface may include, for example, high definition multimedia interface (HDMI), universal serial bus (USB) interface, SD card interface, and/or audio interface. The interface may, for example, electrically or physically connect the electronic device 101 with an external electronic device, and may include a USB connector, SD card/MMC connector, or audio connector.

According to an embodiment, the second supporting member 260 may include, for example, an upper supporting member 260a and a lower supporting member 260b. In an embodiment, the upper supporting member 260a may be disposed to wrap the printed circuit board 240 together with a portion of the first supporting member 211. Circuit devices implemented in the form of integrated circuit chips (e.g., a processor, communication module, or memory) or various electrical/electronic components may be disposed on the printed circuit board 240, and according to embodiments, the printed circuit board 240 may be provided with an electromagnetic shielding environment from the upper supporting member 260a. In an embodiment, the lower supporting member 260b may be utilized as a structure capable of disposing electrical/electronic components such as a speaker module and an interface (e.g., a USB connector, SD card/MMC connector, or audio connector). In an embodiment, electrical/electronic components such as a speaker module and an interface (e.g., a USB connector, SD card/MMC connector, or audio connector) may be disposed on an additional printed circuit board not illustrated. In this case, the lower supporting member 260b may be disposed to wrap the additional printed circuit board together with another portion of the first supporting member 211. The speaker module or interface disposed on an additional printed circuit board or lower supporting member 260b not illustrated may be disposed to correspond with the audio module (e.g., a microphone hole 103 or a speaker hole (e.g., an external speaker hole 107, a speaker hole for calls 114)) or a connector hole (e.g., a first connector hole 108, a second connector hole 109) of FIG. 2.

According to an embodiment, the audio module 207 may be disposed to correspond with or a connector hole 108, 109.

According to an embodiment, the battery 250 is a device for supplying power to at least one component of the electronic device 101, and may include, for example, a non-rechargeable primary battery, or a rechargeable secondary battery, or a fuel cell. At least a portion of the battery 250 may be disposed on substantially the same plane as, for example, the printed circuit board 240. The battery 250 may be integrally disposed within the electronic device 101, or may alternatively be removably disposed with respect to the electronic device 101.

According to an embodiment, the electronic device 101 may further include, within the first supporting member 211, a separate sub-circuit board 290 spaced apart from the printed circuit board 240. The sub-circuit board 290 may be electrically connected to the printed circuit board 240 through a connecting member such as a connecting flexible board or cable. The sub-circuit board 290 may be electrically connected with electrical components disposed in an end region of the electronic device 101, such as a battery 289 or a speaker, USB connector, antenna connector, and/or SIM socket, to transmit signals and power.

Although not illustrated, the antenna may include, for example, a conductive pattern implemented on the surface of the second supporting member 260 through a laser direct structuring process. In an embodiment, the antenna may include a printed circuit pattern formed on the surface of a thin-film, and the antenna in the form of a thin film may be disposed between the rear plate 280 and the battery 250. The antenna may include, for example, near field communication (NFC) antenna, wireless charging antenna, and/or magnetic secure transmission (MST) antenna. The antenna may, for example, perform short-range communication with an external device or wirelessly transmit and receive power necessary for charging. In an embodiment, another antenna structure may be formed by the side structure 210 and/or a portion of the first supporting member 211 or a combination thereof.

According to an embodiment, the camera assembly 207 may include at least one camera module. Inside the electronic device 101, the camera assembly 207 may receive at least a portion of light incident through the optical hole or camera window 212, 213, 219. In an embodiment, the camera assembly 207 may be disposed on the first supporting member 211 at a position adjacent to the printed circuit board 240. In an embodiment, the camera module(s) of the camera assembly 207 may be aligned generally with any one of the camera windows 212, 213, 219, and may be at least partially wrapped by the second supporting member 260 (e.g., the upper supporting member 260a).

Hereinafter, the structure of the battery 250 will be described in detail.

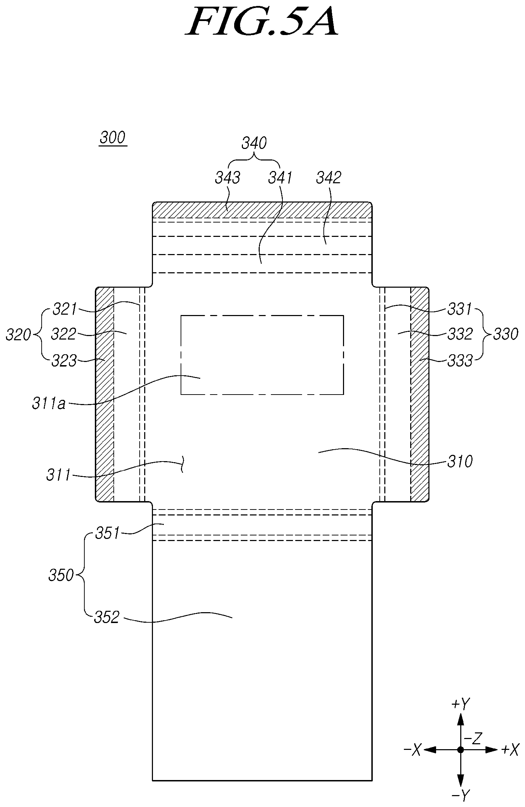

FIG. 5A is a view illustrating one surface (e.g., inner surface) facing a first direction of a battery cover member 300 according to an embodiment of the disclosure.

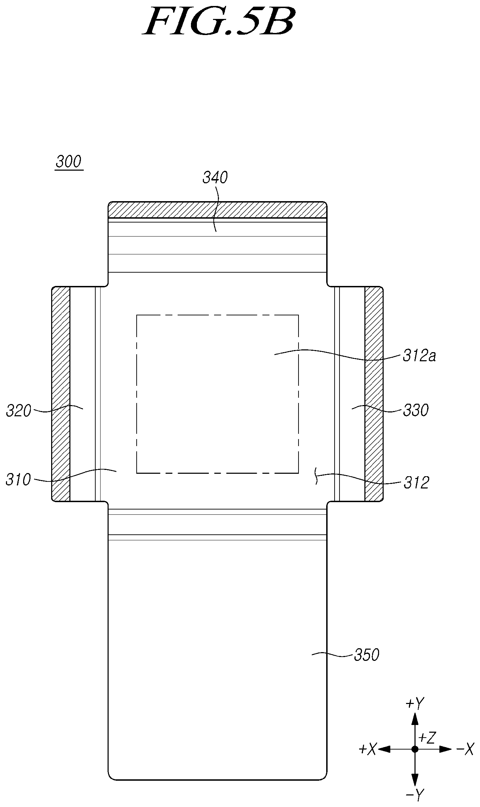

FIG. 5B is a view illustrating the other surface (e.g., outer surface) facing a second direction opposite to the first direction of the battery cover member 300 according to an embodiment of the disclosure.

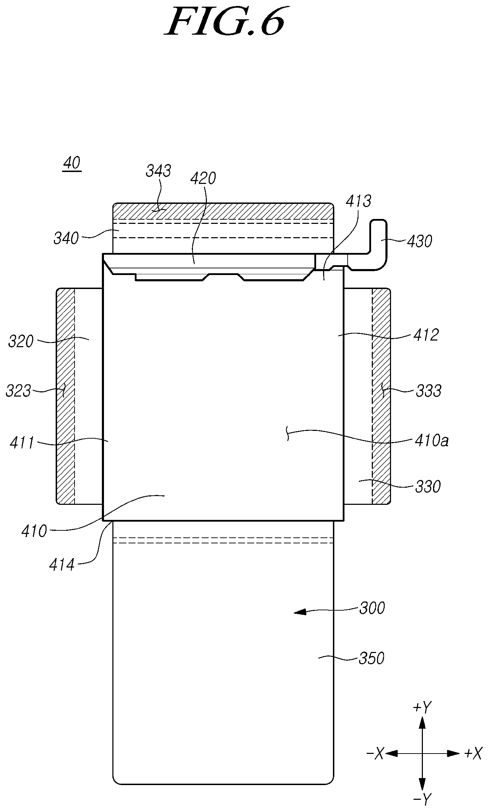

FIG. 6 is a view illustrating a battery cell disposed on one surface of the battery cover member 300 according to an embodiment of the disclosure.

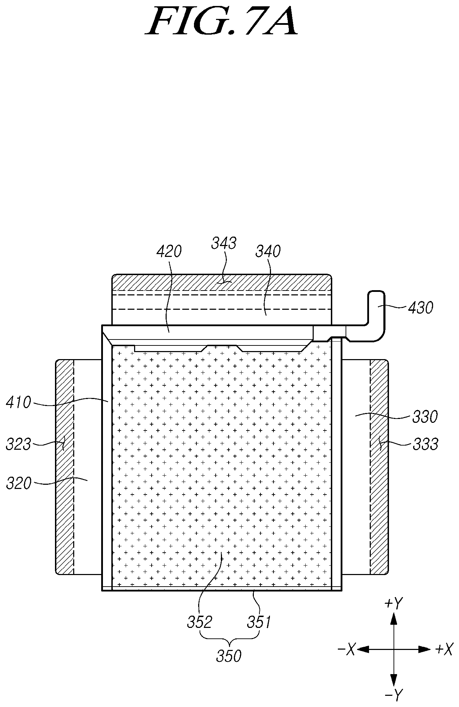

FIGS. 7A to 7D are flowcharts illustrating an operation of a battery cover member 300 covering the battery cell after FIG. 6 according to an embodiment of the disclosure.

According to an embodiment, the electronic device (e.g., the electronic device 101 of FIGS. 1 to 4) may include a housing (e.g., the housing 110 of FIGS. 1 and 2), a main circuit board disposed within the housing 110 (e.g., the printed circuit board 240 of FIGS. 4A and 4B), and a battery assembly 40.

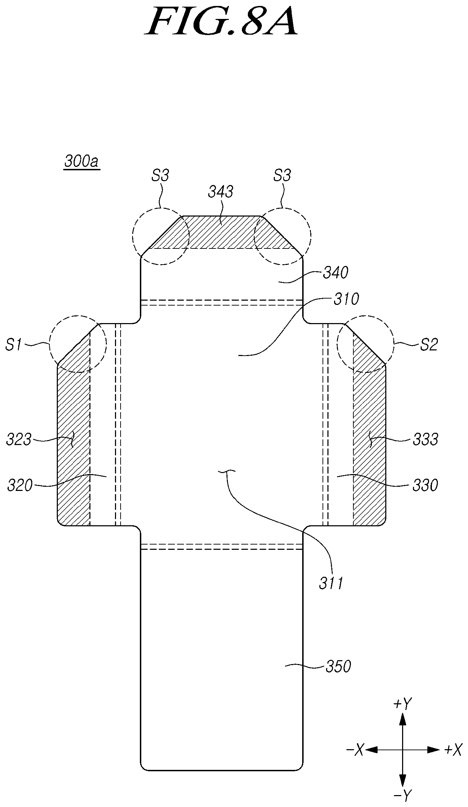

The configuration of the battery assembly 40 of FIGS. 5A to 7D may be the same in part or in whole with the configuration of the battery 189 of FIG. 1 and/or the battery 250 of FIGS. 4A and 4B. The embodiment of FIGS. 5A and 6 may be selectively combined with the embodiment of FIGS. 8A to 16B.

According to an embodiment, the battery assembly 40 may be mounted in a seating groove 211a (e.g., 221a of FIG. 4B) formed in a first supporting member (e.g., the first supporting member 211 of FIG. 4B) (e.g., a bracket) of the electronic device 101. The battery assembly 40 may include a battery cell 410, a battery protection circuit 420 (e.g., PCM; protection circuit module), a flexible circuit board 430, and a cover member 300.

According to an embodiment, the battery cell 410 is an electrode assembly and may include a positive electrode sheet, a negative electrode sheet, and at least one separator. As another example, the battery assembly 40 may further include a pouch accommodating the electrode assembly.

According to an embodiment, the battery cell 410 may have a winding structure, and a positive electrode sheet may be disposed on one surface and a negative electrode sheet may be disposed on the other surface with respect to at least one separator as a reference. The positive electrode sheet, the at least one separator, and the negative electrode sheet may be wound together in a roll shape. For example, the battery cell 410 may be a flexible jelly roll type secondary battery that can be reversibly bent, and the secondary battery of the jelly roll type may be manufactured by laminating the positive electrode sheet, the negative electrode sheet, and at least one separator interposed between the positive electrode sheet and the negative electrode sheet, and winding them in a jelly roll shape. According to an embodiment, one surface of the battery cell 410 or the battery assembly 40 may be provided in a flat rectangular shape corresponding to the shape of the seating groove 211a of the housing 110. According to an embodiment, the battery cell 410 may have a stacked structure, and a positive electrode sheet may be disposed on one surface and a negative electrode sheet may be disposed on the other surface with respect to at least one separator as a reference.

According to an embodiment, the battery protection circuit 420 may be disposed at one side (e.g., upper side) of the battery cell 410, and may be electrically connected with a negative electrode tab and a positive electrode tab exposed or protruding from the battery cell 410. For example, the battery protection circuit 420 may be formed extending along the upper surface (e.g., the surface facing the main circuit board (e.g., the printed circuit board 240 of FIGS. 4A and 4B)) of the battery cell 410. The battery protection circuit 420 may be a module for controlling and protecting the inside of the battery cell 410, and may prevent overcharge and/or over-discharge of the battery cell 410.

According to an embodiment, the flexible circuit board 430 may be disposed at one side of the battery protection circuit 420 (or the battery cell 410), and may electrically connect the battery protection circuit 420 (or the battery cell 410) and the main circuit board (e.g., the printed circuit board 240 of FIGS. 4A and 4B). For example, at least a portion of the flexible circuit board 430 may be located between the battery protection circuit 420 and the main circuit board.

According to an embodiment, the cover member 300 may be formed to wrap at least a portion of at least one of the battery cell 410, the battery protection circuit 420, and the flexible circuit board 430. For example, the battery cell 410 may be covered by the cover member 300 while being assembled with the battery protection circuit 420 and the flexible circuit board 430. As the cover member 300 covers most of the area of the battery cell 410 combined with the battery protection circuit 420 (and/or the flexible circuit board 430), the cover member 300 may protect the battery cell 410 and limit or reduce deformation caused by external impact. The cover member 300 may fix the battery cell 410 within the first supporting member 211 of the electronic device 101.

According to an embodiment, the cover member 300 may be named with various expressions for covering or adhering to the battery cell 410 (or the battery protection circuit 420). For example, the cover member 300 may be named with various expressions such as an adhesive member, a sticky member, a glue member, or a paste member.

According to an embodiment, the material of the cover member 300 may include a primer, polyester (PET) resin, a coating layer, and/or an acrylic adhesive. For example, the general cover material of the cover member 300 may be polyester (PET) resin, and the region for adhesion of the cover member 300 may be an acrylic adhesive.

According to an embodiment, the cover member 300 may include a main cover portion 310, a first cover portion 320 extending to one side from the main cover portion 310, and a second cover portion 330 extending to the other side from the main cover portion 310.

According to an embodiment, the cover member 300 may include a main cover portion 310, a first cover portion 320 extending to one side from the main cover portion 310, a second cover portion 330 extending to the other side from the main cover portion 310, and a third cover portion 340 extending from the main cover portion 310 in a direction perpendicular to the extending direction of the first cover portion 320 and the second cover portion 330.

According to an embodiment, the cover member 300 may include a main cover portion 310, a first cover portion 320 extending to one side from the main cover portion 310, a second cover portion 330 extending to the other side from the main cover portion 310, a third cover portion 340 extending from the main cover portion 310 in a direction perpendicular to the extending direction of the first cover portion 320 and the second cover portion 330, and a fourth cover portion 350 extending from the main cover portion 310 in a direction opposite to the third cover portion 340.

According to an embodiment, at least one of the first cover portion 320, the second cover portion 330, the third cover portion 340, or the fourth cover portion 350 of the cover member 300 may include a flexible portion in order to be disposed to wrap an edge of the battery cell (or the battery protection circuit 420). The flexible portion may be bent and curved according to the shape of the edge of the battery cell (or the battery protection circuit 420), or may extend in a right angle shape.

According to an embodiment, the main cover portion 310 of the cover member 300 may be disposed to wrap at least a portion of the rear surface of the battery cell 410 (e.g., one surface of the battery cell 410 facing the seating groove 211a) (e.g., one surface of the battery cell 410 mounted in the electronic device 101 facing the display direction), and may include an inner surface 311 (e.g., a surface facing the -Z axis direction) facing the battery cell 410, and an outer surface 312 (e.g., a surface facing the +Z axis direction) opposite to the inner surface 311. The inner surface 311 of the main cover portion 310 may be disposed to directly contact the front surface of the battery cell 410, and the outer surface 312 of the main cover portion 310 may be disposed to directly contact the seating groove 211a of the housing 110.

According to an embodiment, the main cover portion 310 may be designed with a size substantially corresponding to the size of the rear surface of the battery cell 410. For example, when the rear surface of the battery cell 410 may be in a rectangular shape (e.g., a square or a rectangle), the shape of the main cover portion 310 may also be overall rectangular (e.g., a square or a rectangle).

According to an embodiment, the main cover portion 310 may be designed in a shape with a portion of the rear surface of the battery cell 410 excluded. For example, the main cover portion 310 may have a shape with a portion cut (e.g., cut out, concave, or stepped) near the vertex. For example, so that other portions (e.g., the first cover portion 320, the second cover portion 330) extending from the main cover portion 310 to the front surface 410a of the battery cell 410 do not overlap with the main cover portion 310, the shape of the main cover portion 310 may be a shape with a portion excluded near the vertex from a rectangular shape (e.g., a square or a rectangle).

According to an embodiment, the inner surface 311 of the main cover portion 310 may comprise a first region 311a for adhering to the battery cell 410 (or the protection circuit board 420), or may be formed as a non-adhesive surface without the first region 311a. For example, the first region 311a may be formed wholly on the inner surface 311 of the main cover portion 310. For example, the first region 311a may be formed only on a portion of the inner surface 311 of the main cover portion 310, and the other portion may be a non-adhesive surface. For example, the inner surface 311 of the main cover portion 310 may be wholly a non-adhesive surface. The adhesive force of the first region 311a may be approximately 0.3 Kgf to 0.5 Kgf. For example, the adhesive force of the first region 311a may be approximately 0.4 Kgf.

According to an embodiment, the outer surface 312 of the main cover portion 310 may comprise a second region 312a for adhering to the seating groove 211a of the housing 110. For example, the second region 312a may be formed wholly on the outer surface 312. For example, the second region 312a may be formed only on a portion of the outer surface 312. According to an embodiment, the second region 312a may comprise an adhesive force greater than the first region 311a.

According to an embodiment, the second region 312a may have an adhesive force greater than the first region 311a. The adhesive force of the second region 312a may be approximately 1.0 Kgf to 1.5 Kgf.

According to an embodiment, the first cover portion 320 of the cover member 300 extends from one end of the main cover portion 310 and may be disposed to wrap a portion of the front surface 410a of the battery cell 410 from the one-side edge 411 (e.g., an edge in the -X-axis direction) of the battery cell 410. According to an embodiment, the first cover portion 320 of the cover member 300 comprises a first-first extending region 321 formed to cover the one-side edge 411 of the battery cell 410, a first-second extending region 322 formed to cover a portion of the front surface 410a of the battery cell 410, and a first adhesive region 323 extending from the first-second extending region 322 and formed to adhere to a portion of the front surface 410a of the battery cell 410. The first adhesive region 323 may be an edge region of the first cover portion 320 spaced apart from the main cover portion 310.

According to an embodiment, the first-first extending region 321 and the first-second extending region 322 of the first cover portion 320 may be non-adhesive surfaces. The first adhesive region 323 of the first cover portion 320 may have an adhesive force greater than the first region 311a of the main cover portion 310. The adhesive force of the first adhesive region 323 may be approximately 0.8 Kgf to 1.2 Kgf. For example, the adhesive force of the first adhesive region 323 may be approximately 1.0 Kgf.

According to an embodiment, the second cover portion 330 of the cover member 300 extends from the other end of the main cover portion 310 and may be disposed to wrap a portion of the front surface 410a of the battery cell 410 from the other-side edge 412 (e.g., an edge in the +X-axis direction) of the battery cell 410. According to an embodiment, the second cover portion 330 of the cover member 300 may have a shape that may be left-right inverted with respect to the first cover portion 320 based on the main cover portion 310. The second cover portion 330 of the cover member 300 comprises a second-first extending region 331 formed to cover the other-side edge 412 of the battery cell 410, a second-second extending region 332 formed to cover a portion of the rear surface 410a of the battery cell 410, and a second adhesive region 333 extending from the second-second extending region 332 and formed to adhere to a portion of the rear surface 410a of the battery cell 410. The second adhesive region 333 may be an edge region of the second cover portion 330 spaced apart from the main cover portion 310.

According to an embodiment, the second-first extending region 331 and the second-second extending region 332 of the second cover portion 330 may be non-adhesive surfaces. The second adhesive region 333 of the second cover portion 330 may have an adhesive force greater than the first region 311a of the main cover portion 310. The second adhesive region 333 of the second cover portion 330 may provide an adhesive force substantially equal to the first adhesive region 323 of the first cover portion 320. The adhesive force of the second adhesive region 333 may be approximately 0.8 Kgf to 1.2 Kgf. For example, the adhesive force of the second adhesive region 333 may be approximately 1.0 Kgf.

According to an embodiment, when viewing the rear surface of the battery assembly 40, the first cover portion 320 and the second cover portion 330 may be disposed such that they do not overlap with each other. When viewing the front surface of the battery assembly 40, the first cover portion 320 and the second cover portion 330 may be spaced apart. For example, the first adhesive region 323 of the first cover portion 320 may be in a state of being adhered to a portion adjacent to the one-side edge 411 of the front surface 410a of the battery cell 410, and the second adhesive region 333 of the second cover portion 330 may be in a state of being adhered to a portion adjacent to the other-side edge 412 of the front surface 410a of the battery cell 410.

According to an embodiment, when viewing a side surface of the battery assembly 40 (e.g., when viewing from the direction of the one-side edge 411 or the other-side edge 412), a portion of the first cover portion 320 and a portion of the second cover portion 330 disposed on the front surface of the battery cell 410 may overlap. For example, as the first adhesive region 323 and the second adhesive region 333 are adhered to different edges of the rear surface 410a of the battery cell 410 with substantially the same thickness, an end of the first adhesive region 323 and an end of the second adhesive region 333 may be disposed facing each other.

According to an embodiment, the third cover portion 340 of the cover member 300 extends from an upper end of the main cover portion 310, and may be disposed to wrap a portion of the front surface 410a of the battery cell 410 from the upper-side edge 413 (e.g., an edge in the +Y-axis direction) of the battery cell 410. An extending direction of the third cover portion 340 may be substantially perpendicular to the first cover portion 320 and/or the second cover portion 330. The third cover portion 340 may be in direct contact with the protection circuit board 420 and/or the flexible printed circuit board 430 disposed at an upper end of the battery cell 410, and may cover at least a portion thereof so as not to be exposed to the outside.

According to an embodiment, the third cover portion 340 of the cover member 300 may comprise a third-first extending region 341 formed to cover the upper-side edge 413 of the battery cell 410 (and/or the protection circuit board 420), a third-second extending region 342 formed to cover a portion of the rear surface 410a of the battery cell 410, and a third adhesive region 343 extending from the third-second extending region 342 and formed to adhere to a portion of the rear surface 410a of the battery cell 410. The third adhesive region 343 may be an edge region of the third cover portion 340 spaced apart from the main cover portion 310.

According to an embodiment, the third-first extending region 341 and the third-second extending region 342 of the third cover portion 340 may be non-adhesive surfaces. The third adhesive region 343 of the third cover portion 340 may have an adhesive force greater than the first region 311a of the main cover portion 310. The adhesive force of the third adhesive region 343 may be approximately 0.8 Kgf to 1.2 Kgf. For example, the adhesive force of the third adhesive region 343 may be approximately 1.0 Kgf.

According to an embodiment, when viewing the front surface of the battery assembly 40, the first cover portion 320, the second cover portion 330, and the third cover portion 340 may be disposed such that they do not overlap with each other. When viewing the front surface of the battery assembly 40, the first cover portion 320, the second cover portion 330, and the third cover portion 340 may be spaced apart from each other. For example, the first adhesive region 323 of the first cover portion 320 may be in a state of being adhered to a portion adjacent to a left edge (e.g., an edge in the -X-axis direction) of the front surface 410a of the battery cell 410, the second adhesive region 333 of the second cover portion 330 may be in a state of being adhered to a portion adjacent to a right edge (e.g., an edge in the +X-axis direction) of the front surface 410a of the battery cell 410, and the third adhesive region 343 of the third cover portion 340 may be in a state of being adhered to a portion adjacent to an upper-side edge (e.g., an edge in the +Y-axis direction) of the front surface 410a of the battery cell 410.

According to an embodiment, the fourth cover portion 350 of the cover member 300 extends from a lower end of the main cover portion 310, and may be disposed to wrap at least a portion of the front surface 410a of the battery cell 410 from the lower-side edge 414 (e.g., an edge in the -Y-axis direction) of the battery cell 410. An extending direction of the fourth cover portion 350 may be substantially perpendicular to the first cover portion 320 and/or the second cover portion 330. An extending direction of the fourth cover portion 350 may be opposite to an extending direction of the third cover portion 340.

According to an embodiment, the fourth cover portion 350 of the cover member 300 may comprise a fourth-first extending region 351 formed to cover the lower-side edge 414 of the battery cell 410, and a fourth-second extending region 352 formed to cover at least a portion of the rear surface 410a of the battery cell 410. The fourth-second extending region 352 may be spaced apart from the main cover portion 310 with the battery cell 410 interposed therebetween.

According to an embodiment, the fourth-first extending region 351 and the fourth-second extending region 352 of the fourth cover portion 350 may be non-adhesive surfaces. The fourth-second extending region 352 of the fourth cover portion 350 may have a width extending from a portion adjacent to the one-side edge 411 of the battery cell 410 to a portion adjacent to the other-side edge 412 of the battery cell 410. Accordingly, when viewing the front surface of the battery assembly 40, the fourth-second extending region 352 may be disposed to overlap with a portion (e.g., the first adhesive region 323) of the first cover portion 320 and a portion (e.g., the second adhesive region 333) of the second cover portion 330. The fourth-second extending region 352 of the fourth cover portion 350 may have a length extending to the upper-side edge 413 of the battery cell 410. Accordingly, when viewing the front surface of the battery assembly 40, the fourth-second extending region 352 may be disposed to overlap with a portion (e.g., the third adhesive region 343) of the third cover portion 340. In an embodiment, the fourth-second extending region 352 of the fourth cover portion 350 may comprise a fourth adhesive region (not illustrated).

According to an embodiment, the fourth-second extending region 352 of the fourth cover portion 350 may be disposed below the first adhesive region 323 of the first cover portion 320, the second adhesive region 333 of the second cover portion 330, and the third adhesive region 343 of the third cover portion 340. After the fourth-second extending region 352 forming a non-adhesive surface may be disposed on the front surface 410a of the battery cell 410, as the first adhesive region 323, the second adhesive region 333, and the third adhesive region 343 are adhered on respective edges of the fourth-second extending region 352, the cover member 300 may be disposed to wrap all respective side surfaces of the battery cell 410 without directly adhering to the battery cell 410.

According to an embodiment, the cover member 300 may be formed in an integrated form, and the first cover portion 320, the second cover portion 330, the third cover portion 340, and the fourth cover portion 350 may be disposed to extend from the main cover portion 310. At least one cover portion among the first cover portion 320, the second cover portion 330, the third cover portion 340, and the fourth cover portion 350 may comprise adhesive regions 323, 333, and 343 capable of adhering to the front surface 410a of the battery cell 410. The adhesive regions 323, 333, and 343 may be regions comprising an adhesive member in designated regions of the cover member 300. In an embodiment, at least one cover portion among the first cover portion 320, the second cover portion 330, the third cover portion 340, and the fourth cover portion 350 may comprise a pull tab (not illustrated). For example, a region of the pull tab (not illustrated) may be a region extending in a direction opposite to the main cover portion 310 from the adhesive regions 323, 333, and 343 in the cover portions 320, 330, 340, and 350.

Hereinafter, a process of the cover member 300 covering the battery cell 410 will be described with reference to FIGS. 6 to 7D.

First, referring to FIG. 6, in a state where the cover member 300 is unfolded, the battery cell 410 assembled with the protection circuit board 420 and the flexible printed circuit board 430 may be disposed on the inner surface 311 of the main cover portion 310 of the cover member 300. The main cover portion 310 of the cover member 300 may substantially cover a seating surface (e.g., a surface facing the seating groove 211a of the housing 110) of the battery cell 410.

Subsequently, referring to FIG. 7A, the fourth cover portion 350 extending in a lower direction (e.g., in the -Y-axis direction) of the main cover portion 310 of the cover member 300 may be disposed to wrap the front surface 410a of the battery cell 410 from the lower-side edge 414 of the battery cell 410. For example, the fourth-first extending region 351 of the fourth cover portion 350 may contact and cover the lower-side edge 414 of the battery cell 410, and the fourth-second extending region 352 of the fourth cover portion 350 may contact and cover the front surface 410a of the battery cell 410. The fourth-second extending region 352 of the fourth cover portion 350 may be disposed excluding both-side edge portions of the battery cell 410. The fourth-second extending region 352 of the fourth cover portion 350 may be disposed excluding the protection circuit board 420 and the flexible printed circuit board 430 disposed at the upper side of the battery cell 410.

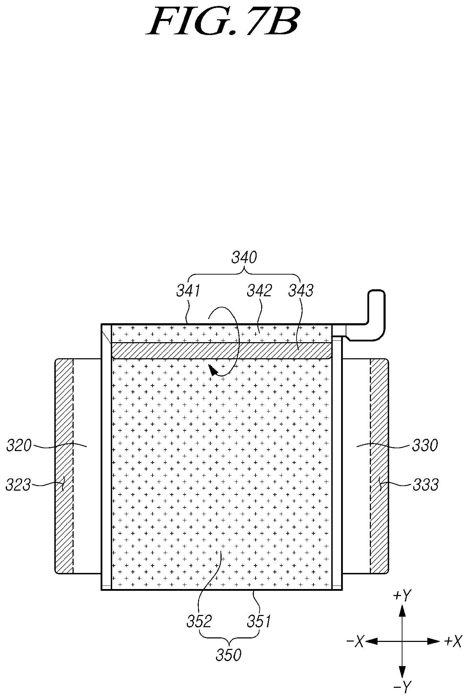

Subsequently, referring to FIG. 7B, the third cover portion 340 extending in an upper direction (e.g., in the +Y-axis direction) of the main cover portion 310 of the cover member 300 may be disposed to wrap at least a portion of the battery cell 410 and at least a portion of the protection circuit board 420 assembled at the upper end of the battery cell 410. For example, the third-first extending region 341 of the third cover portion 340 may contact and cover the upper-side edge of the protection circuit board 420, and the third-second extending region 342 and the third adhesive region 343 of the third cover portion 340 may contact and cover the front surface of the protection circuit board 420 and a portion of the front surface 410a of the battery cell 410. A portion of the third-second extending region 342 and/or the third adhesive region 343 may be disposed on the fourth cover portion 350. The third adhesive region 343 may be adhered on the fourth cover portion 350.

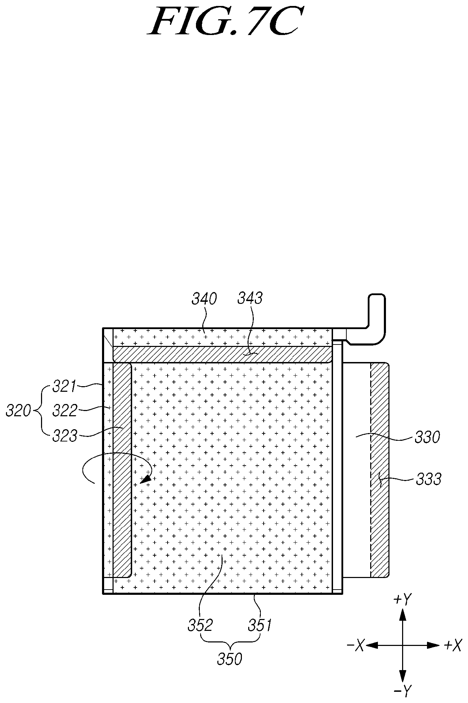

Subsequently, referring to FIG. 7C, the first cover portion 320 extending in a left direction (e.g., in the -X-axis direction) of the main cover portion 310 of the cover member 300 may be disposed to wrap a portion of the front surface 410a of the battery cell 410 from the one-side edge 411 of the battery cell 410. For example, the first-first extending region 321 of the first cover portion 320 may contact and cover the one-side edge 411 of the battery cell 410, and the first-second extending region 322 and/or the first adhesive region 323 of the first cover portion 320 may contact and cover the front surface 410a of the battery cell 410. A portion of the first-second extending region 322 and the first adhesive region 323 may be disposed on the fourth cover portion 350. The first adhesive region 323 may be adhered on the fourth cover portion 350. The first adhesive region 323 may be spaced apart from the third adhesive region 343.

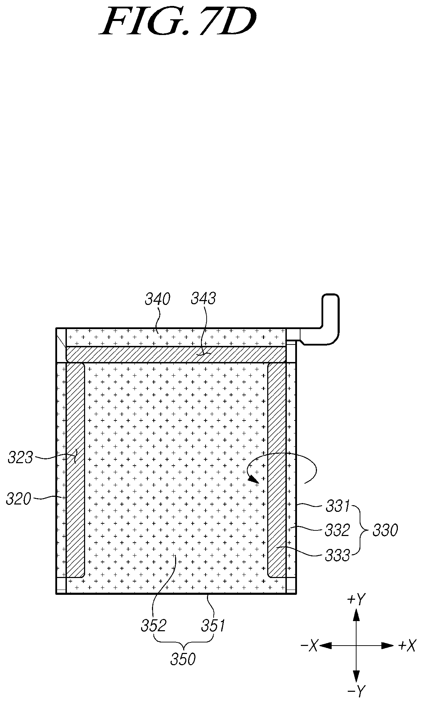

Subsequently, referring to FIG. 7D, the second cover portion 330 extending in a right direction (e.g., in the +X-axis direction) of the main cover portion 310 of the cover member 300 may be disposed to wrap a portion of the front surface 410a of the battery cell 410 from the other-side edge 412 of the battery cell 410. For example, the second-first extending region 331 of the second cover portion 330 may contact and cover the other-side edge 412 of the battery cell 410, and the second-second extending region 332 and/or the second adhesive region 333 of the second cover portion 330 may contact and cover the front surface 410a of the battery cell 410. A portion of the second-second extending region 332 and the second adhesive region 333 may be disposed on the fourth cover portion 350. The second adhesive region 333 may be adhered on the fourth cover portion 350. The second adhesive region 323 may be spaced apart from the first adhesive region 323 and the third adhesive region 343.

Referring to FIGS. 7B, 7C, and 7D, the cover member 300 is illustrated to cover the upper, left, and right side edges of the battery cell 410 in that order, but is not limited thereto, and may be designed and changed in various orders for easy covering of the battery cell 410.

According to an embodiment, as the first adhesive region 323, the second adhesive region 333, and the third adhesive region 343 are adhered to the fourth-second extending region 352, the cover member 300 may cover all side edges of the battery cell 410, and adhesion between the battery cell 410 and the cover member 300 may be omitted. Accordingly, the battery cell 410 may be prevented from being damaged by excessive adhesion of the cover member 300.

FIG. 8A is a view illustrating one surface (e.g., an inner surface) facing the first direction of the battery cover member 300a according to an embodiment of the disclosure.

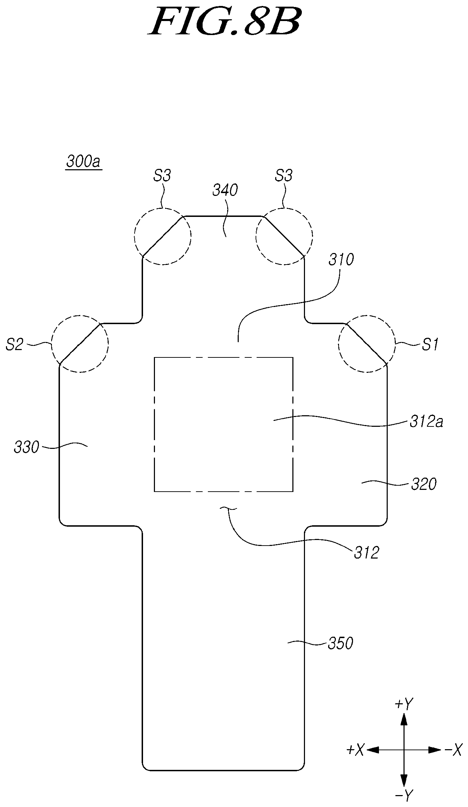

FIG. 8B is a view illustrating the other surface (e.g., an outer surface) facing the second direction opposite to the first direction of the battery cover member 300a according to an embodiment of the disclosure.

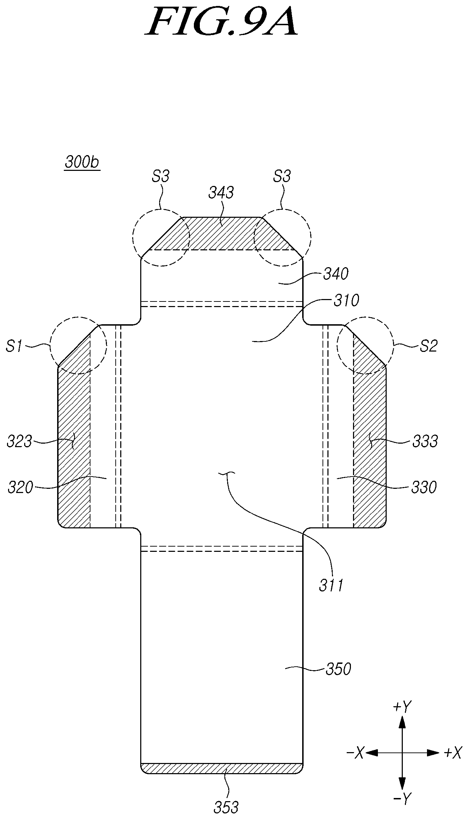

FIG. 9A is a view illustrating one surface (e.g., an inner surface) facing the first direction of the battery cover member 300b according to an embodiment of the disclosure.

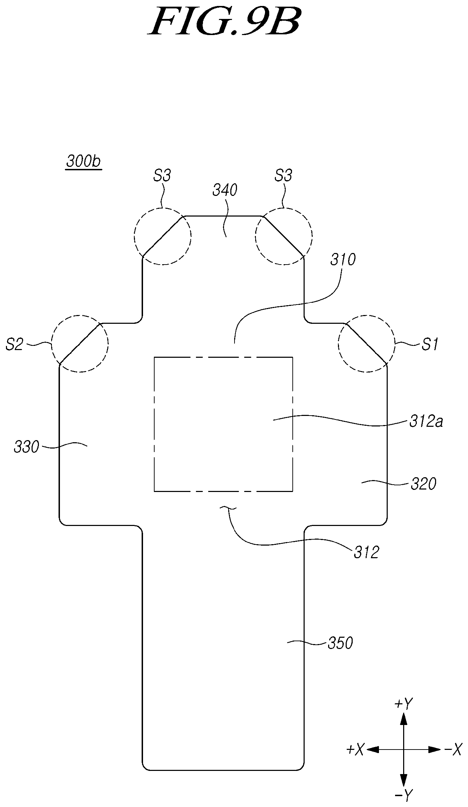

FIG. 9B is a view illustrating the other surface (e.g., an outer surface) facing the second direction opposite to the first direction of the battery cover member 300b according to an embodiment of the disclosure.

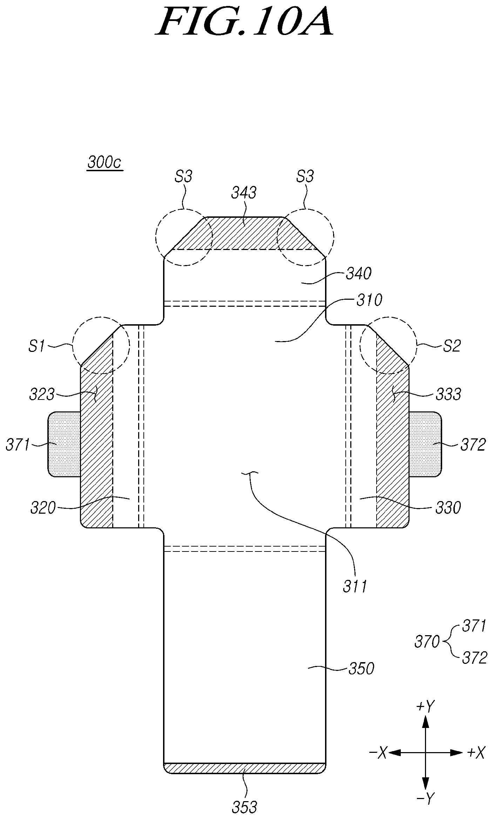

FIG. 10A is a view illustrating one surface (e.g., an inner surface) facing a first direction of the battery cover member 300c according to an embodiment of the disclosure.

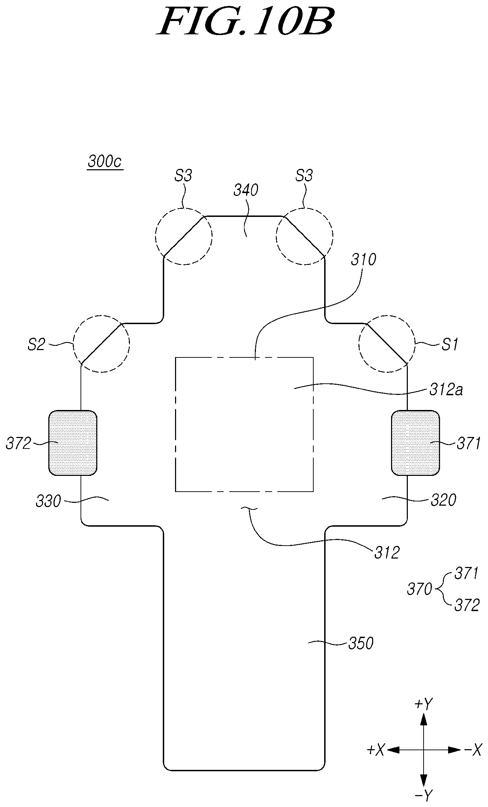

FIG. 10B is a view illustrating the other surface (e.g., an outer surface) facing a second direction opposite to the first direction of the battery cover member 300c according to an embodiment of the disclosure.

According to an embodiment, the battery cover member (300a; 300b; 300c) may be a member for covering a battery cell (e.g., the battery cell 410 of FIG. 6), and may comprise a main cover portion 310, a first cover portion 320 extending to one side from the main cover portion 310, a second cover portion 330 extending to the other side from the main cover portion 310, a third cover portion 340 extending from the main cover portion 310 in a direction perpendicular to the extending direction of the first cover portion 320 and the second cover portion 330, and a fourth cover portion 350 extending from the main cover portion 310 in a direction opposite to the third cover portion 340.

The configuration of the battery cover member (300a; 300b; 300c) of FIGS. 8A to 10B may be identical in whole or part to the configuration of the battery cover member 300 of FIGS. 5A to 7D. The embodiment of FIGS. 8A to 10B may be selectively combined with the embodiment of FIGS. 10A to 16B.

Hereinafter, a description will be provided focusing on configurations different from the battery cover member 300 of FIGS. 5 to 7D.

According to an embodiment, the main cover portion 310 may be disposed to wrap at least a portion of a rear surface of the battery cell 410 (e.g., one surface of the battery cell 410 facing the seating groove (e.g., the seating groove 211a of FIG. 4B)), and may comprise an inner surface 311 facing the battery cell 410 and an outer surface 312 opposite to the inner surface 311. The inner surface 311 of the main cover portion 310 may be disposed to directly contact the rear surface of the battery cell 410, and the outer surface 312 of the main cover portion 310 may be disposed to adhere to the seating groove 211a of the housing 110. The inner surface 311 of the main cover portion 310 may be formed as a weak adhesive surface (e.g., an adhesive surface having an adhesive force of approximately 0.3 Kgf to 0.5 Kgf) or may be a non-adhesive surface.

According to an embodiment, the first cover portion 320 of the cover member (300a; 300b; 300c) extends from one end of the main cover portion 310 and may be disposed to wrap a portion of a front surface of the battery cell 410 from one-side edge of the battery cell 410 (e.g., an edge in the -X-axis direction). The first cover portion 320 may be formed at an edge in one direction (e.g., the -X-axis direction) and may comprise a first adhesive region 323 having a greater adhesive force (e.g., an adhesive force of approximately 0.8 Kgf to 1.2 Kgf) than the main cover portion 310.

According to an embodiment, a portion (e.g., the first adhesive region 323) of an edge in one direction (e.g., the -X-axis direction) of the first cover portion 320 may have an inclined shape (S1). For example, based on an outer edge (e.g., an edge in the -X-axis direction) of the first cover portion 320 extending from the main cover portion 310, an upper corner (e.g., a corner facing the +Y-axis) may comprise a shape inclined at a specified angle. For example, based on a rectangular shape (e.g., a square or rectangular shape) extending in one direction (e.g., the -X-axis direction) from the main cover portion 310, the first cover portion 320 may have a shape in which regions near upper vertices are partially recessed (e.g., cut, concave, or stepped). Unlike the inclined shape (S1) of the upper corner, a lower corner (e.g., a corner facing the -Y-axis) may have a substantially right-angled form.

According to an embodiment, as the first adhesive region 323 may be adhered on the fourth cover portion 350 according to the inclined shape (S1) of the upper corner of the first cover portion 320, the first adhesive region 323 may be adhered more closely to and more widely over the center of the fourth cover portion 350 without overlapping with the third adhesive region 343. When the first adhesive region 323 and the third adhesive region 343 are adhered, the first adhesive region 323 and the third adhesive region 343 are spaced apart from each other, and the respective inclined corner may be disposed in parallel.

According to an embodiment, the second cover portion 330 of the cover member (300a; 300b; 300c) extends from the other end of the main cover portion 310 and may be disposed to wrap a portion of the front surface of the battery cell 410 from the other-side edge of the battery cell 410 (e.g., an edge in the +X-axis direction). The second cover portion 330 may be formed at an edge in the other direction (e.g., the +X-axis direction) and may comprise a second adhesive region 333 having a greater adhesive force (e.g., an adhesive force of approximately 0.8 Kgf to 1.2 Kgf) than the main cover portion 310.

According to an embodiment, a portion (e.g., the second adhesive region 333) of an edge in the other direction (e.g., the +X-axis direction) of the second cover portion 330 may have an inclined shape (S2). For example, based on an outer edge (e.g., an edge in the +X-axis direction) of the second cover portion 330 extending from the main cover portion 310, an upper corner (e.g., a corner facing the +Y-axis) may comprise a shape inclined at a specified angle. For example, based on a rectangular shape (e.g., a square or rectangular shape) extending in one direction (e.g., the +X-axis direction) from the main cover portion 310, the second cover portion 330 may have a shape in which regions near upper vertices are partially recessed (e.g., cut, concave, or stepped). Unlike the inclined shape (S2) of the upper corner, a lower corner (e.g., a corner facing the -Y-axis) may have a substantially right-angled form.

According to an embodiment, as the second adhesive region 333 may be adhered on the fourth cover portion 350 according to the inclined shape (S2) of the upper corner of the second cover portion 330, the second adhesive region 333 may be adhered more closely to and more widely over the center of the fourth cover portion 350 without overlapping with the third adhesive region 343. When the second adhesive region 333 and the third adhesive region 343 are adhered, the second adhesive region 333 and the third adhesive region 343 are spaced apart from each other, and the respective inclined corners may be disposed in parallel. The inclined shape (S2) of the upper corner of the second cover portion 330 and the inclined shape (S1) of the upper corner of the first cover portion 320 may be left-right inverted shapes with respect to each other.

According to an embodiment, the third cover portion 340 of the cover member (300a; 300b; 300c) extends from the upper end of the main cover portion 310 and may be disposed to wrap a portion of the front surface of the battery cell 410 from the upper-side edge of the battery cell 410 (e.g., an edge in the +Y-axis direction). The third cover portion 340 may be formed at an edge in the upper direction (e.g., the +Y-axis direction) and may comprise a third adhesive region 343 having a greater adhesive force (e.g., an adhesive force of approximately 0.8 Kgf to 1.2 Kgf) than the main cover portion 310.

According to an embodiment, a portion (e.g., the third adhesive region 343) of an edge in the upper direction (e.g., the +Y-axis direction) of the third cover portion 340 may have an inclined shape (S3). For example, based on an upper edge (e.g., an edge in the +Y-axis direction) of the third cover portion 340 extending from the main cover portion 310, corners on both sides (left and right) may comprise a shape inclined at a specified angle. For example, based on a rectangular shape (e.g., a square or rectangular shape) extending in the upper direction (e.g., the +Y-axis direction) from the main cover portion 310, the third cover portion 340 may have a shape in which regions near vertices on both sides are partially recessed (e.g., cut, concave, or stepped).

According to an embodiment, as the third adhesive region 343 may be adhered on the fourth cover portion 350 according to the inclined shapes (S3) of the corners on both sides of the third cover portion 340, the third adhesive region 343 may be adhered more closely to and more widely over the center of the fourth cover portion 350 without overlapping with the first adhesive region 323 and the second adhesive region 333. When the first adhesive region 323, the second adhesive region 333, and the third adhesive region 343 are adhered, the first adhesive region 323, the second adhesive region 333, and the third adhesive region 343 may be spaced apart from each other. Respective inclined corners facing each other of the first adhesive region 323 and the third adhesive region 343 may be disposed in parallel. Respective inclined corners facing each other of the second adhesive region 333 and the third adhesive region 343 may be disposed in parallel.

According to an embodiment, the outer surface 312, which is opposite to the inner surface 311 facing the battery cell 410, of the cover member (300a; 300b; 300c) may comprise a region 312a for adhering to a seating groove (e.g., the seating groove 211a of FIG. 4B) of a housing (e.g., the housing 110 of FIG. 3).

The battery cover member 300b of FIGS. 9A and 9B may further comprise a fourth adhesive region 353 formed at an edge of the fourth cover portion 350.

Referring to FIGS. 9A and 9B, according to an embodiment, the fourth adhesive region 353 of the fourth cover portion 350 may be a region for adhering to a front surface of the battery cell 410 (e.g., the front surface 410a of FIG. 6), and the cover member 300b wrapping the battery cell 410 may be fixed to the battery cell 410 so as not to slip due to external impact or movement. The fourth adhesive region 353 of the fourth cover portion 350 may have a smaller adhesive force compared to other adhesive regions (e.g., the first adhesive region 323, the second adhesive region 333, and the third adhesive region 343). The adhesive force of the fourth adhesive region 353 may be approximately 0.3 Kgf to 0.5 Kgf. For example, the adhesive force of the fourth adhesive region 353 may be approximately 0.4 Kgf. In an embodiment, the fourth adhesive region 353 of the fourth cover portion 350 may have a similar adhesive force to other adhesive regions (e.g., the first adhesive region 323, the second adhesive region 333, and the third adhesive region 343). For example, the adhesive force of the one surface of the fourth adhesive region 353 may be approximately 0.8 Kgf to 1.2 Kgf.

The battery cover member 300c of FIGS. 10A and 10B may further comprise a pull tab 370 disposed on at least one of the cover portions (e.g., the first cover portion 320, the second cover portion 330, the third cover portion 340, and the fourth cover portion 350) to facilitate detachment of the cover member 300c.

Referring to FIGS. 10A and 10B, according to an embodiment, the pull tab 370 may have at least a portion disposed in an edge region of the first cover portion 320. A portion of the first pull tab 371 disposed at one-side edge of the first cover portion 320 may be disposed on a surface opposite to the first adhesive region 323 and may be adhered more strongly than the adhesive force of the first adhesive region 323. The first pull tab 371 may have another portion extending outward from the first cover portion 320 and may form a non-adhesive surface having a designated friction force so that an operator can grasp it firmly. A portion of the second pull tab 372 disposed at an edge of the second cover portion 330 may be disposed on a surface opposite to the second adhesive region 333 and may be adhered more strongly than the adhesive force of the second adhesive region 333. The second pull tab 372 may have another portion extending outward from the second cover portion 330 and may form a non-adhesive surface having a designated friction force so that an operator can grasp it firmly.

Referring to FIGS. 10A and 10B, the first pull tab 371 and the second pull tab 372 connected to the first cover portion 320 and the second cover portion 330, respectively, are disclosed, but are not limited thereto, and may be disposed on one or a plurality of locations for an operator to easily grasp. The position of the pull tab 370 may be at least one of the first cover portion 320, the second cover portion 330, or the third cover portion 340 adjacent to the adhesive region (323, 333, 343).

Referring to FIGS. 10A and 10B, according to an embodiment, the pull tab 370 may be a portion that an operator grasps by hand to detach the cover member 300c wrapping the battery cell 410 during battery reuse, and may be named with various expressions. For example, the pull tab 370 may be named with various expressions such as a handle, a grip portion, a strap, or a knob. According to an embodiment, the pull tab 370 of the cover member 300c may be formed in an integral structure extending from one side of the first cover portion 320, the second cover portion 330, the third cover portion 340, and/or the fourth cover portion 350. For example, the pull tab 370 may be an element configured as one with the main material of the cover member 300c.

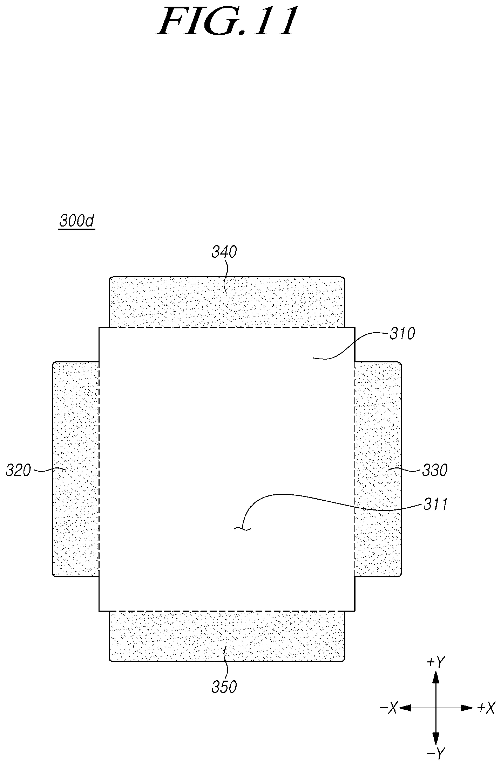

FIG. 11 is a view illustrating one surface (e.g., an inner surface) facing a first direction of the battery cover member 300d according to an embodiment of the disclosure.

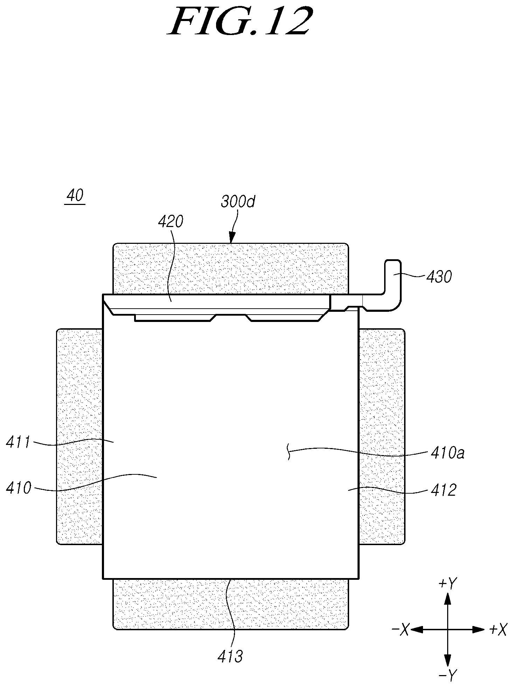

FIG. 12 is a view illustrating a battery cell disposed on one surface (e.g., an inner surface) of the battery cover member 300d according to an embodiment of the disclosure.

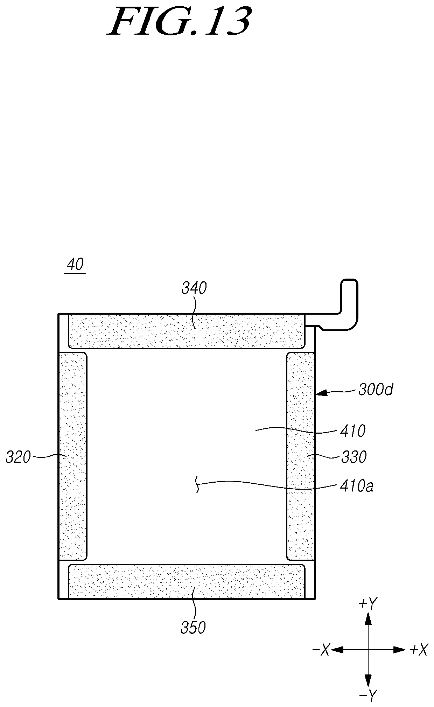

FIG. 13 is a view illustrating the battery cover member 300d wrapping the battery cell according to an embodiment of the disclosure.

According to an embodiment, an electronic device (e.g., the electronic device 101 of FIGS. 1 to 4) may comprise a housing (e.g., the housing 110 of FIGS. 1 and 2), a main circuit board (e.g., the printed circuit board 240 of FIGS. 4A and 4B) disposed within the housing 110, and a battery assembly 40.

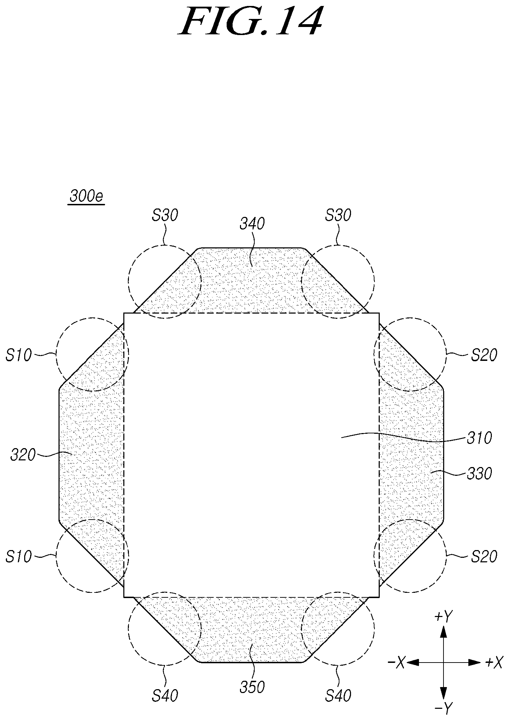

The configuration of the battery assembly 40 of FIGS. 11 to 13 may be identical in whole or part to the configuration of the battery 189 of FIG. 1, the battery 250 of FIGS. 4A and 4B, and/or the battery assembly 40 of FIGS. 6 to 7D. The configuration of the battery cover member 300d of FIGS. 11 to 13 may be identical in whole or part to the configuration of the battery cover member (300; 300a; 300b; 300c) of FIGS. 5A to 10B. The embodiment of FIGS. 11 to 13 may be selectively combined with the embodiment of FIGS. 14 to 16B.

According to an embodiment, the battery assembly 40 may be mounted in a seating groove 211a (e.g., the seating groove 221a of FIG. 4B) formed in a first support member (e.g., the first support member 211 of FIG. 4B) (e.g., a bracket) of the electronic device 101. The battery assembly 40 may comprise a battery cell 410, a battery protection circuit 420 (e.g., a PCM; protection circuit module), a flexible circuit board 430, and a cover member 300.

According to an embodiment, the cover member (cover member) 300d may be disposed to wrap a portion of at least one of the battery cell 410, the battery protection circuit 420, and the flexible circuit board 430. For example, the battery cell 410, when assembled with the battery protection circuit 420 and the flexible circuit board 430, may be covered by the cover member 300d. As the cover member 300d covers most of the area of the battery cell 410 combined with the battery protection circuit 420 (and/or the flexible circuit board 430), the cover member 300d may protect the battery cell 410 and may limit or reduce deformation due to external impact.

Hereinafter, a description will be provided focusing on configurations different from the battery cover member (300; 300a; 300b; 300c) of FIGS. 5A to 10B.

According to an embodiment, the cover member 300d may comprise a main cover portion 310, a first cover portion 320 extending from the main cover portion 310 in one side direction, a second cover portion 330 extending from the main cover portion 310 in the other side direction, a third cover portion 340 extending from the main cover portion 310 in a direction perpendicular to the extension directions of the first cover portion 320 and the second cover portion 330, and/or a fourth cover portion 350 extending from the main cover portion 310 in a direction opposite to the third cover portion 340.

According to an embodiment, the main cover portion 310 of the cover member 300d may be disposed to wrap at least a portion of the rear surface (e.g., a surface of the battery cell 410 facing the seating groove 211a) of the battery cell 410, and may comprise an inner surface 311 facing the battery cell 410, and an outer surface (not shown) opposite to the inner surface. The inner surface 311 of the main cover portion 310 may be disposed to directly contact the front surface of the battery cell 410, and the outer surface of the main cover portion 310 may be disposed to directly contact the seating groove 211a of the housing 110.

According to an embodiment, the main cover portion 310 may be designed with a size substantially corresponding to the size of the front surface of the battery cell 410.

According to an embodiment, the inner surface 311 of the main cover portion 310 may have an adhesive force smaller than the outer surface. At least a portion of the outer surface of the main cover portion 310 may form a strong adhesive surface such that the battery assembly 40 may be fixed to the seating groove 211a, and the adhesive force of the strong adhesive surface may be approximately 1.0 Kgf to 1.5 Kgf. At least a portion of the inner surface 311 of the main cover portion 310 may form a non-adhesive surface or a weak adhesive surface, and the adhesive force of the weak adhesive surface may be approximately 0.3 Kgf to 0.5 Kgf.

According to an embodiment, the first cover portion 320, the second cover portion 330, the third cover portion 340, and the fourth cover portion 350 of the cover member 300d may have shapes corresponding to each other. For example, each of the first cover portion 320, the second cover portion 330, the third cover portion 340, and the fourth cover portion 350 may have substantially the same or similar size (e.g., area) of the region covering the front surface 410a of the battery cell 410 as they extend from the main cover portion 310.

According to an embodiment, the first cover portion 320 of the cover member 300d may extend from one end of the main cover portion 310, and may be disposed to wrap a portion of the front surface 410a of the battery cell 410 from the one-side edge 411 (e.g., edge in the -X axis direction) of the battery cell 410.

According to an embodiment, one surface of the first cover portion 320 of the cover member 300d may form an adhesive surface overall. For example, one surface of the first cover portion 320 that contacts the battery cell 410 may have a state in which it is adhered from the one-side edge 411 of the battery cell 410 to a portion of the rear surface 410a of the battery cell 410. The one surface of the first cover portion 320 may have an adhesive force greater than the inner surface 311 of the main cover portion 310. The adhesive force of the one surface of the first cover portion 320 may be approximately 0.8 Kgf to 1.2 Kgf.

According to an embodiment, the second cover portion 330 of the cover member 300d may extend from the other end of the main cover portion 310, and may be disposed to wrap a portion of the front surface 410a of the battery cell 410 from the other-side edge 412 (e.g., edge in the +X axis direction) of the battery cell 410.

According to an embodiment, one surface of the second cover portion 330 of the cover member 300d may form an adhesive surface overall. For example, one surface of the second cover portion 330 that contacts the battery cell 410 may have a state in which it is adhered from the other-side edge 412 of the battery cell 410 to a portion of the front surface 410a of the battery cell 410. The one surface of the second cover portion 330 may have an adhesive force greater than the inner surface 311 of the main cover portion 310. The adhesive force of the one surface of the second cover portion 330 may be approximately 0.8 Kgf to 1.2 Kgf.

According to an embodiment, the third cover portion 340 of the cover member 300d may extend from the top of the main cover portion 310, and may be disposed to wrap a portion of the front surface 410a of the battery cell 410 from the upper-side edge 413 (e.g., edge in the +Y axis direction) of the battery cell 410. The extension direction of the third cover portion 340 may be substantially perpendicular to the first cover portion 320 and/or the second cover portion 330. The third cover portion 340 may directly contact the battery protection circuit 420 and/or the flexible circuit board 430 disposed on the top of the battery cell 410, and may cover at least a portion so that it is not exposed to the outside.

According to an embodiment, one surface of the third cover portion 340 of the cover member 300d may form an adhesive surface overall. For example, one surface of the third cover portion 340 that contacts the battery cell 410 may have a state in which it is adhered via the upper surface and side surface of the battery protection circuit 420 to a portion of the front surface 410a of the battery cell 410. The one surface of the third cover portion 340 may have an adhesive force greater than the inner surface 311 of the main cover portion 310. The adhesive force of the one surface of the third cover portion 340 may be approximately 0.8 Kgf to 1.2 Kgf.

According to an embodiment, the fourth cover portion 350 of the cover member 300 may extend from the bottom of the main cover portion 310, and may be disposed to wrap at least a portion of the front surface 410a of the battery cell 410 from the lower-side edge 414 (e.g., edge in the -Y axis direction) of the battery cell 410. The extension direction of the fourth cover portion 350 may be substantially perpendicular to the first cover portion 320 and/or the second cover portion 330. The extension direction of the fourth cover portion 350 may be opposite to the extension direction of the third cover portion 340.

According to an embodiment, one surface of the fourth cover portion 350 of the cover member 300d may form an adhesive surface overall. For example, one surface of the fourth cover portion 350 that contacts the battery cell 410 may have a state in which it is adhered from the lower-side edge 414 of the battery cell 410 to a portion of the front surface 410a of the battery cell 410. The one surface of the fourth cover portion 350 may have an adhesive force greater than the inner surface 311 of the main cover portion 310. The adhesive force of the one surface of the fourth cover portion 350 may be approximately 0.8 Kgf to 1.2 Kgf.

According to an embodiment, the first cover portion 320, the second cover portion 330, the third cover portion 340, and the fourth cover portion 350 may be adhered and disposed on all edges and the front surface 410a of the battery cell 410. As the first cover portion 320, the second cover portion 330, the third cover portion 340, and the fourth cover portion 350 adhere and cover all edges of the battery cell 410, the internal elements of the battery cell 410 may be fixed so as not to slip due to external impact or movement of the battery assembly 410.

According to an embodiment, the first cover portion 320, the second cover portion 330, the third cover portion 340, and the fourth cover portion 350 disposed on the front surface 410a of the battery cell 410 may be disposed without overlapping each other. According to an embodiment, the first cover portion 320, the second cover portion 330, the third cover portion 340, and the fourth cover portion 350 disposed on the front surface 410a of the battery cell 410 may be spaced apart.

FIG. 14 is a view illustrating one surface (e.g., inner surface) facing the first direction of the battery cover member 300e according to an embodiment of the disclosure.

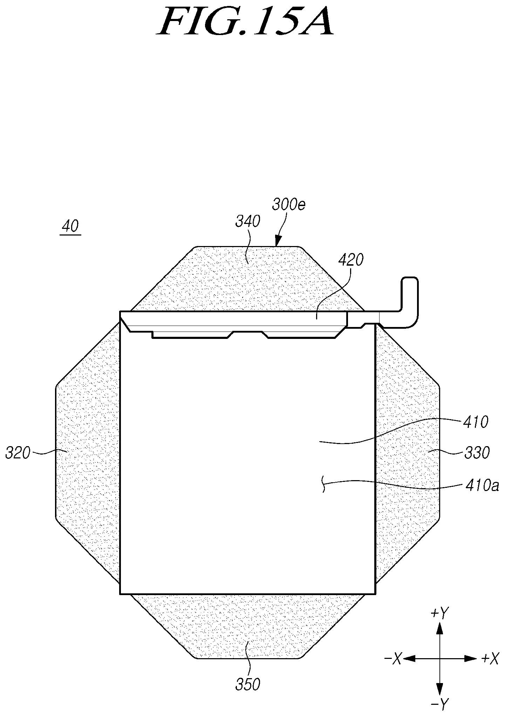

FIG. 15A is a view illustrating a battery cell disposed on one surface (e.g., inner surface) of the battery cover member 300e according to an embodiment of the disclosure.

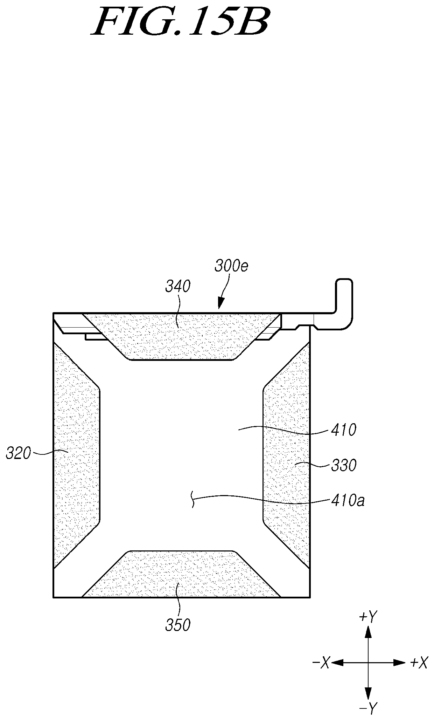

FIG. 15B is a view illustrating the battery cover member 300e wrapping the battery cell according to an embodiment of the disclosure.

According to an embodiment, the battery cover member 300e may be a member for covering the battery cell 410, and may comprise a main cover portion 310, a first cover portion 320 extending from the main cover portion 310 in one side direction, a second cover portion 330 extending from the main cover portion 310 in the other side direction, a third cover portion 340 extending from the main cover portion 310 in a direction perpendicular to the extension directions of the first cover portion 320 and the second cover portion 330, and a fourth cover portion 350 extending from the main cover portion 310 in a direction opposite to the third cover portion 340.

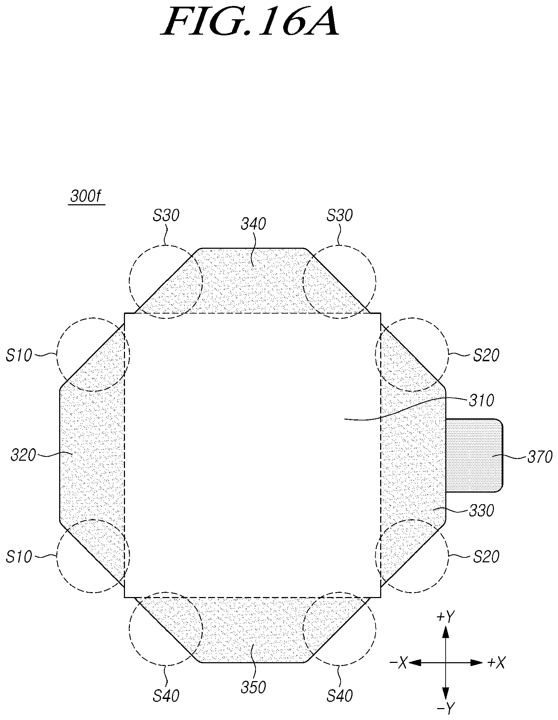

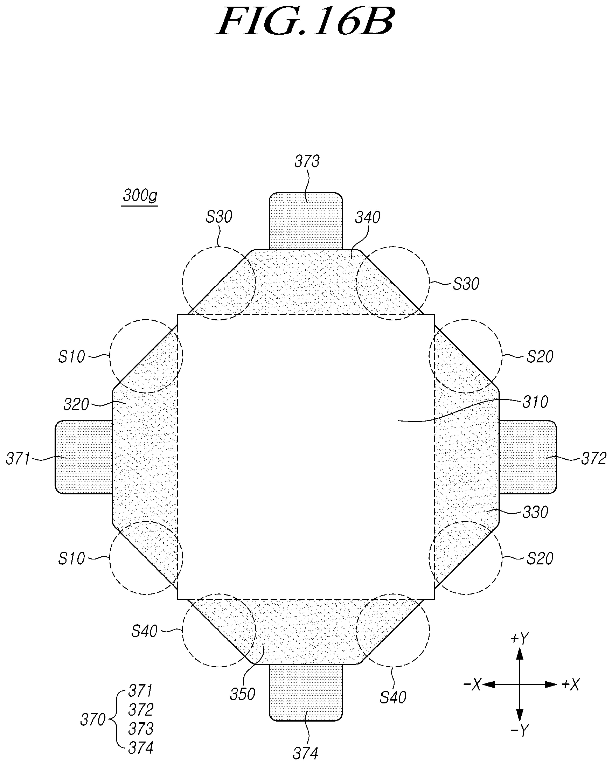

The configuration of the battery cover member 300e of FIGS. 14 to 15B may be identical in whole or in part to the configuration of the battery cover member (300; 300a; 300b; 300c; 300d) of FIGS. 5A to 13. The embodiment of FIGS. 14 to 15B may be selectively combined with the embodiment of FIGS. 16A and 16B.

Hereinafter, the description will focus on a configuration different from the battery cover member 300d of FIGS. 11 to 13.

According to an embodiment, a portion of an edge of the first cover portion 320 in one side direction (e.g., -X axis direction) may comprise an inclined shape S10. For example, based on the one-side edge (e.g., -X axis direction edge) of the first cover portion 320 extending from the main cover portion 310, upper and lower corners (e.g., corners facing the +Y axis and -Y axis) may comprise an inclined shape at a specified angle. For example, the first cover portion 320 may have a shape in which upper and lower vertices are partially cut (e.g., cut, concave, or stepped) based on a rectangular shape (e.g., square or rectangular shape) extending from the main cover portion 310 in one side direction (e.g., -X axis direction). For example, at least a portion of the first cover portion 320 may have a trapezoidal shape.

According to an embodiment, when the first cover portion 320 is adhered on the battery cell 410 (e.g., front surface 410a), according to the inclined shape S10 of the first cover portion 320, it may be adhered wider and closer to the center of the battery cell 410 without overlapping with the third cover portion 340 and the fourth cover portion 350.

According to an embodiment, a portion of an edge of the second cover portion 330 in the other side direction (e.g., +X axis direction) may comprise an inclined shape S20. For example, based on the other-side edge (e.g., +X axis direction edge) of the second cover portion 330 extending from the main cover portion 310, upper and lower corners (e.g., corners facing the +Y axis and -Y axis) may comprise an inclined shape at a specified angle. For example, the second cover portion 330 may have a shape in which upper and lower vertices are partially cut (e.g., cut, concave, or stepped) based on a rectangular shape (e.g., square or rectangular shape) extending from the main cover portion 310 in the other side direction (e.g., +X axis direction). For example, at least a portion of the second cover portion 330 may have a trapezoidal shape.

According to an embodiment, when the second cover portion 330 is adhered on the battery cell 410 (e.g., front surface 410a), according to the inclined shape S20 of the second cover portion 330, it may be adhered wider and closer to the center of the battery cell 410 without overlapping with the third cover portion 440 and the fourth cover portion 450.

According to an embodiment, a portion of an edge of the third cover portion 340 in the upper side direction (e.g., +Y axis direction) may comprise an inclined shape S30. For example, based on the upper-side edge (e.g., +Y axis direction edge) of the third cover portion 340 extending from the main cover portion 310, left and right corners (e.g., corners facing the -X axis and +X axis) may comprise an inclined shape at a specified angle. For example, the third cover portion 340 may have a shape in which left and right vertices are partially cut (e.g., cut, concave, or stepped) based on a rectangular shape (e.g., square or rectangular shape) extending from the main cover portion 310 in the upper side direction (e.g., +Y axis direction). For example, at least a portion of the third cover portion 340 may have a trapezoidal shape.

According to an embodiment, when the third cover portion 340 is adhered on the battery cell 410 (e.g., front surface 410a), according to the inclined shape S30 of the third cover portion 340, it may be adhered wider and closer to the center of the battery cell 410 without overlapping with the first cover portion 320 and the second cover portion 330.

According to an embodiment, a portion of an edge of the fourth cover portion 350 in the lower side direction (e.g., -Y axis direction) may comprise an inclined shape S40. For example, based on the lower-side edge (e.g., -Y axis direction edge) of the fourth cover portion 350 extending from the main cover portion 310, left and right corners (e.g., corners facing the -X axis and +X axis) may comprise an inclined shape at a specified angle. For example, the fourth cover portion 350 may have a shape in which left and right vertices are partially cut (e.g., cut, concave, or stepped) based on a rectangular shape (e.g., square or rectangular shape) extending from the main cover portion 310 in the lower side direction (e.g., -Y axis direction). For example, at least a portion of the fourth cover portion 350 may have a trapezoidal shape.

According to an embodiment, when the fourth cover portion 350 is adhered on the battery cell 410 (e.g., front surface 410a), according to the inclined shape S40 of the fourth cover portion 350, it may be adhered wider and closer to the center of the battery cell 410 without overlapping with the first cover portion 320 and the second cover portion 330.

According to an embodiment, when the first cover portion 320, the second cover portion 330, the third cover portion 340, and the fourth cover portion 350 are adhered on the battery cell 410 (or the battery protection circuit 420), each of the cover portions may be spaced apart from adjacent cover portions. The inclined corner of the first cover portion 320 and the inclined corner of the third cover portion 340 facing the first cover portion 320 may be disposed in parallel. The inclined corner of the second cover portion 330 and the inclined corner of the third cover portion 340 facing the second cover portion 330 may be disposed in parallel. The inclined corner of the second cover portion 330 and the inclined corner of the fourth cover portion 350 facing the second cover portion 330 may be disposed in parallel. The inclined corner of the first cover portion 320 and the inclined corner of the fourth cover portion 350 facing the first cover portion 320 may be disposed in parallel.

According to an embodiment, at least one of a first cover portion 320, a second cover portion 330, a third cover portion 340, and/or a fourth cover portion 350 may comprise an adhesive region in at least a portion of an area. The cover member 300d may be attached to a side surface and/or a front surface 410a of the battery cell 410 by utilizing the adhesive region.

FIG. 16A is a view illustrating a surface facing a first direction of the battery cover member 300f according to an embodiment of the disclosure (e.g., an inner surface).

FIG. 16B is a view illustrating a surface facing a first direction of the battery cover member 300g according to an embodiment of the disclosure (e.g., an inner surface).

According to an embodiment, the battery cover member 300f; 300g is a member for covering the battery cell 410, and may comprise a main cover portion 310, a first cover portion 320 extending from one side of the main cover portion 310, a second cover portion 330 extending from the other side of the main cover portion 310, a third cover portion 340 extending from the main cover portion 310 in a direction perpendicular to an extension direction of the first cover portion 320 and the second cover portion 330, and a fourth cover portion 350 extending from the main cover portion 310 in a direction opposite to the third cover portion 340.

A configuration of the battery cover member 300f; 300g in FIGS. 16A and 16B may be identical in part or in whole to a configuration of the battery cover member 300; 300a; 300b; 300c; 300d; 300e in FIGS. 5A to 15B.

The embodiments of FIGS. 16A and 16B may substantially follow the embodiments of FIGS. 14 and 15B. Hereinafter, description will be focused on a configuration different from the battery cover member 300e of FIGS. 14 and 15B.

With reference to FIG. 16A according to an embodiment, the battery cover member 300f may be disposed at one side of the second cover portion 330 and may comprise a pull tab 370 for facilitating detachment of the cover member 300f.

According to an embodiment, at least a portion of the pull tab 370 may be disposed on an edge region of the second cover portion 330. A portion of the pull tab 370 disposed on the edge region of the second cover portion 330 may be disposed on a surface opposite to an adhesive surface, and may have an adhesive force greater than the adhesive force of the adhesive surface of the second cover portion 330. Another portion of the pull tab 370 may extend outward from the first cover portion 320 and may form a non-adhesive surface having a friction force designated to allow an operator to firmly grasp the tab.

With reference to FIG. 15B according to an embodiment, the battery cover member 300g may be disposed at one side of the first cover portion 320, the second cover portion 330, the third cover portion 340, and the fourth cover portion 350, and may comprise a pull tab 370 for facilitating detachment of the cover member 300f (e.g., a first pull tab 371, a second pull tab 372, a third pull tab 373, and a fourth pull tab 374). Each of the pull tabs 370 may extend outward from each of the cover portions and may form a non-adhesive surface having a friction force designated to allow an operator to firmly grasp the tab. According to an embodiment, the pull tab 370 of the cover member 300g may be formed in an integrated structure extending from one side of among the first cover portion 320, the second cover portion 330, the third cover portion 340, and/or the fourth cover portion 350. For example, the pull tab 370 may be an element formed as one with the main material of the cover member 300g.

With reference to FIGS. 16A and 16B, while a pull tab adhered to one cover portion (e.g., the second cover portion 330) or pull tabs adhered to all cover portions are disclosed, it is not limited thereto, and may be disposed in various positions and in various numbers for the operator to easily grasp.

The battery assembly of an electronic device according to an embodiment of the disclosure may provide a cover member that can easily cover and detach from the battery cell.

The battery cover member according to an embodiment of the disclosure may be configured such that an adhesive force of a region adhering to the housing may be greater than an adhesive force of a region adhering to the battery cell. Accordingly, the battery assembly disposed within the housing may maintain a stably fixed state. In addition, when detaching the battery cell from the cover member, the deformation (e.g., bending) of the battery may be reduced or limited.

The battery cover member according to an embodiment of the disclosure may be configured to have different adhesive forces in respective regions. For example, the adhesive force of a region adhering between battery cover members (e.g., strong adhesion) may be configured to be greater than the adhesive force of a region adhering to the battery cell (e.g., non-adhesive and/or weak adhesion). Accordingly, when detaching the battery cell from the cover member, the deformation (e.g., bending) of the battery may be reduced or limited.

Effects obtainable from the disclosure are not limited to the effects mentioned above, and other effects not mentioned will be clearly understood from the following description by those skilled in the art to which present disclosure pertains.

An electronic device (e.g., 101 of FIG. 1) according to an embodiment of the disclosure may comprise a housing (e.g., 110 of FIGS. 2 and 3) and a battery assembly (e.g., 40 of FIG. 6) disposed within the housing, the battery assembly comprising a battery cell (e.g., 410 of FIG. 6) and a cover member 300 disposed to wrap at least a portion of the battery cell. The cover member (e.g., 300 of FIG. 6) of the battery assembly may comprise a main cover portion (e.g., 310 of FIG. 5A) disposed to wrap a rear surface of the battery cell and including an inner surface facing the battery cell (e.g., 311 of FIG. 5A) and an outer surface opposite to the inner surface (e.g., 312 of FIG. 5B), a first cover portion (e.g., 320 of FIG. 6) extending from the main cover portion and disposed to wrap from one-side edge (e.g., 411 of FIG. 6) of the battery cell to a portion of a front surface (e.g., 410a of FIG. 6) of the battery cell, and a second cover portion (e.g., 330 of FIG. 6) extending from the main cover portion and disposed to wrap from an other-side edge (e.g., 412 of FIG. 6) of the battery cell to a portion of the front surface of the battery cell.

According to an embodiment, a first adhesive region (e.g., 323 of FIG. 6) of the first cover portion (e.g., 320 of FIG. 6) and a second adhesive region (e.g., 333 of FIG. 6) of the second cover portion (e.g., 330 of FIG. 6) may be attached to the front surface (e.g., 410a of FIG. 6) of the battery cell.

According to an embodiment, an adhesive force of the inner surface of the main cover portion may be less than an adhesive force of the outer surface adhering to the housing.

According to an embodiment, an adhesive force of the inner surface of the main cover portion may be less than an adhesive force of a first adhesive region (e.g., 323 of FIG. 6) of the first cover portion and a second adhesive region (e.g., 333 of FIG. 6) of the second cover portion.

According to an embodiment, when viewing the front surface of the battery assembly, the first cover portion and the second cover portion may be spaced apart.

According to an embodiment, when viewing a side surface of the battery assembly, the first cover portion and the second cover portion disposed on the rear surface of the battery cell may overlap.

According to an embodiment, the first adhesive region may be an edge region of the first cover portion spaced apart from the main cover portion, and the second adhesive region may be an edge region of the second cover portion spaced apart from the main cover portion.

According to an embodiment, the first adhesive region may be a region extending from the main cover portion to an end of the first cover portion, and the second adhesive region may be a region extending from the main cover portion to an end of the second cover portion.

According to an embodiment, the cover member may further comprise a third cover portion (e.g., 340 of FIG. 6) extending from the main cover portion in a direction different from the first cover portion and the second cover portion and disposed to wrap from an edge of the battery cell to a portion of the front surface of the battery cell.

According to an embodiment, the cover member may further comprise a fourth cover portion (e.g., 350 of FIG. 6) extending from the main cover portion in a direction opposite to the third cover portion and disposed to wrap the front surface of the battery cell from an edge of the battery cell. The fourth cover portion may overlap with at least one of the first cover portion, the second cover portion, or the third cover portion.

According to an embodiment, a portion of the fourth cover portion may be disposed between the front surface of the battery cell and the first adhesive region of the first cover portion, and another portion of the fourth cover portion may be disposed between the front surface of the battery cell and the second adhesive region of the second cover portion.

According to an embodiment, a size of an adhesive region of the fourth cover portion may be smaller than a size of an adhesive region of each of the first to third cover portions, and the adhesive region of the fourth cover portion may directly adhere to the rear surface of the battery cell.

According to an embodiment, the cover member may further comprise a fourth cover portion extending from the main cover portion in a direction opposite to the third cover portion and disposed to wrap a portion of the front surface of the battery cell from an edge of the battery cell. The fourth cover portion may be spaced apart from the first cover portion, the second cover portion, and the third cover portion.

According to an embodiment, the cover member may further comprise a pull tab (e.g., 370 of FIG. 6) extending from one side of at least one of the first cover portion and the second cover portion for detachment of the cover member from the battery cell.

According to an embodiment, the inner surface of the main cover portion may be formed as a non-adhesive surface, and an adhesive force of the first adhesive region of the first cover portion and the second adhesive region of the second cover portion may be 0.8 Kgf to 1.2 Kgf.

According to an embodiment, an adhesive force of the inner surface of the main cover portion may be 0.3 Kgf to 0.5 Kgf, and an adhesive force of the first adhesive region of the first cover portion and the second adhesive region of the second cover portion may be 0.8 Kgf to 1.2 Kgf.

According to an embodiment, the inner surface of the main cover portion may have a non-adhesive surface or an adhesive force of 0.3 Kgf to 0.5 Kgf, and the adhesive force of the outer surface of the main cover portion may be 1.0 Kgf to 1.5 Kgf.

According to an embodiment, the first adhesive region of the first cover portion includes a first inclined shape, the second adhesive region of the second cover portion includes a second inclined shape, and the first inclined shape and the second inclined shape may be left-right inversions of each other.

According to an embodiment, the third adhesive region of the third cover portion includes a third inclined shape, the facing inclined corners of the first adhesive region and the third adhesive region are disposed in parallel, and the facing inclined corners of the second adhesive region and the third adhesive region may be disposed in parallel.

According to an embodiment, a battery assembly (e.g., 40 of FIG. 6) may comprise a battery cell (e.g., 410 of FIG. 6) and a cover member (e.g., 300 of FIG. 6) disposed to wrap at least a portion of the battery cell. The cover member (e.g., 300 of FIG. 6) may comprise a main cover portion (e.g., 310 of FIG. 6) disposed to wrap a rear surface of the battery cell and including an inner surface (e.g., 311 of FIG. 5a) facing the battery cell and an outer surface (e.g., 312 of FIG. 5b) opposite to the inner surface, a first cover portion (e.g., 320 of FIG. 6) extending from the main cover portion and disposed to wrap a portion of a front surface (e.g., 410a of FIG. 6) of the battery cell from one-side edge (e.g., 411 of FIG. 6) of the battery cell, and a second cover portion (e.g., 330 of FIG. 6) extending from the main cover portion and disposed to wrap a portion of the front surface of the battery cell from an other-side edge (e.g., 412 of FIG. 6) of the battery cell.

According to an embodiment, a first adhesive region (e.g., 323 of FIG. 6) of the first cover portion (e.g., 320 of FIG. 6) and a second adhesive region (e.g., 333 of FIG. 6) of the second cover portion (e.g., 330 of FIG. 6) may be attached to a front surface (e.g., 410a of FIG. 6) of the battery cell.

According to an embodiment, the adhesive force of the inner surface of the main cover portion may be smaller than the adhesive force of the outer surface, and the adhesive force of the inner surface of the main cover portion may be smaller than the adhesive force of the first adhesive region (e.g., 323 of FIG. 6) of the first cover portion and the second adhesive region (e.g., 333 of FIG. 6) of the second cover portion.

According to an embodiment, when viewing a front surface of the battery assembly, the first cover portion and the second cover portion may be disposed to be spaced apart from each other.

According to an embodiment, when viewing a side surface of the battery assembly, the first cover portion and the second cover portion disposed on a rear surface of the battery cell may be overlapped.

According to an embodiment, the first adhesive region may be an edge region of the first cover portion spaced apart from the main cover portion, and the second adhesive region may be an edge region of the second cover portion spaced apart from the main cover portion.

According to an embodiment, the cover member may further comprise a third cover portion (e.g., 340 of FIG. 6) extending from the main cover portion and disposed to wrap a portion of a front surface of the battery cell from an upper edge of the battery cell, and a fourth cover portion (e.g., 350 of FIG. 6) extending from the main cover portion and disposed to wrap the front surface of the battery cell from a lower edge of the battery cell. A portion of the fourth cover portion may be disposed between the front surface of the battery cell and the first adhesive region of the first cover portion, another portion of the fourth cover portion may be disposed between the front surface of the battery cell and the second adhesive region of the second cover portion, and yet another portion of the fourth cover portion may be disposed between the front surface of the battery cell and the third adhesive region of the third cover portion.

According to an embodiment, the first adhesive region may be an area extending from the main cover portion to an end of the first cover portion, and the second adhesive region may be an area extending from the main cover portion to an end of the second cover portion.

Various embodiments of the disclosure and the terms used therein are not intended to limit the technical features described in the disclosure to specific embodiments, and should be understood to include various changes, equivalents, or substitutes for the corresponding embodiment.

## Claims

1. An electronic device (101), comprising:
a housing (110); and
a battery assembly (40) disposed within the housing and comprising a battery cell (410) and a cover member (300) disposed to wrap at least a portion of the battery cell,
wherein the cover member (300) of the battery assembly comprises:
a main cover portion (310) disposed to wrap a rear surface of the battery cell and comprising an inner surface (311) facing the battery cell and an outer surface (312) opposite to the inner surface;
a first cover portion (320) extending from the main cover portion and disposed to wrap from a one-side edge (411) of the battery cell to a portion of a front surface (410a) of the battery cell; and
a second cover portion (330) extending from the main cover portion and disposed to wrap from an other-side edge (412) of the battery cell to a portion of the front surface of the battery cell,
wherein a first adhesive region (323) of the first cover portion (320) and a second adhesive region (333) of the second cover portion (330) are attached to the front surface (410a) of the battery cell, and
wherein the first cover portion and the second cover portion are spaced apart when viewing a front surface of the battery assembly.

2. The electronic device (101) of claim 1, wherein an adhesive force of the inner surface of the main cover portion is less than an adhesive force of the outer surface adhering to the housing.

3. The electronic device (101) of claim 1 or 2, wherein an adhesive force of the inner surface of the main cover portion is less than an adhesive force of the first adhesive region (323) of the first cover portion and the second adhesive region (333) of the second cover portion.

4. The electronic device (101) of any one of claims 1 to 3, wherein the first cover portion and the second cover portion disposed on the front surface of the battery cell are overlapped when viewing a side surface of the battery assembly.

5. The electronic device (101) of any one of claims 1 to 4, wherein the first adhesive region is an edge region of the first cover portion spaced apart from the main cover portion, and the second adhesive region is an edge region of the second cover portion spaced apart from the main cover portion.

6. The electronic device (101) of any one of claims 1 to 4, wherein the first adhesive region is a region extending from the main cover portion to an end of the first cover portion, and the second adhesive region is a region extending from the main cover portion to an end of the second cover portion.

7. The electronic device (101) of any one of claims 1 to 6, wherein the cover member further comprises a third cover portion (340) extending from the main cover portion in a direction different from the first cover portion and the second cover portion and disposed to wrap a portion of the front surface of the battery cell from an edge of the battery cell.

8. The electronic device (101) of claim 7, wherein the cover member further comprises a fourth cover portion (350) extending from the main cover portion in a direction opposite to the third cover portion and disposed to wrap the front surface of the battery cell from an edge of the battery cell, and the fourth cover portion is overlapped with at least one of the first cover portion, the second cover portion, or the third cover portion.

9. The electronic device (101) of claim 8, wherein a portion of the fourth cover portion is disposed between the front surface of the battery cell and the first adhesive region of the first cover portion, and another portion of the fourth cover portion is disposed between the front surface of the battery cell and the second adhesive region of the second cover portion.

10. The electronic device (101) of claim 8, wherein a size of an adhesive region of the fourth cover portion is less than a size of an adhesive region of each of the first to third cover portions, and the adhesive region of the fourth cover portion is directly adhered to the front surface of the battery cell.

11. The electronic device (101) of claim 7, wherein the cover member further comprises a fourth cover portion extending from the main cover portion in a direction opposite to the third cover portion and disposed to wrap a portion of the front surface of the battery cell from an edge of the battery cell, and the fourth cover portion is spaced apart from the first cover portion, the second cover portion, and the third cover portion.

12. The electronic device (101) of any one of claims 1 to 11, wherein the cover member further comprises a pull tab (370) extending from one side of at least one of the first cover portion and the second cover portion, for detachment of the cover member from the battery cell.

13. The electronic device (101) of any one of claims 1 to 12, wherein the inner surface of the main cover portion is formed as a non-adhesive surface or has an adhesive force of 0.3 Kgf to 0.5 Kgf, and an adhesive force of the first adhesive region of the first cover portion and the second adhesive region of the second cover portion is 0.8 Kgf to 1.2 Kgf.

14. The electronic device (101) of any one of claims 1 to 12, wherein the inner surface of the main cover portion is a non-adhesive surface or has an adhesive force of 0.3 Kgf to 0.5 Kgf, and an adhesive force of the outer surface of the main cover portion is 1.0 Kgf to 1.5 Kgf.

15. The electronic device (101) of any one of claims 1 to 12, wherein the first adhesive region of the first cover portion comprises a first inclined shape, the second adhesive region of the second cover portion comprises a second inclined shape, and a third adhesive region of the third cover portion comprises a third inclined shape, the first inclined shape and the second inclined shape are left-right inversions of each other, inclined corners of the first adhesive region and the third adhesive region that face each other are disposed in parallel, and inclined corners of the second adhesive region and the third adhesive region that face each other are disposed in parallel.
